# EUROPEAN PATENT APPLICATION

(11) **EP 4 275 820 A1**
(43) Date of publication of application: **15.11.2023**
(21) Application number: 22736748.9
(22) Date of filing: 05.01.2022
(51) Int. Cl.: B23B 27/00, B23B 27/16, B23B 29/00

(54) **CLAMPING WORK TOOL, BLADE-TIP-REPLACEABLE CUTTING TOOL EQUIPPED WITH CLAMPING WORK TOOL, AND CUTTING INSERT**

(30) Priority: 07.01.2021 JP 2021001675; 28.12.2021 JP 2021214809
(71) Applicant: Mitsubishi Materials Corporation, Tokyo 100-8117 (JP)
(72) Inventor: HAGIWARA Takayuki, Tokyo 100-8117 (JP); KITAJIMA Jun, Tokyo 100-8117 (JP)
(74) Representative: Hoffmann Eitle
(86) International application number: PCT/JP2022/000135
(87) International publication number: WO 2022/149580

(57) **Abstract**

Provided is a clamping tool for attaching a cutting insert to a holder or detaching a cutting insert from a holder, the cutting insert including a head portion having a circular cutting edge and a shaft portion, the clamping tool including: a first jaw portion configured to be locked to the holder; and an operation lever configured to be connected to the first jaw portion, in which the first jaw portion has a locking portion configured to be locked to the holder, and a first pressing portion configured to push the head portion downward and fit the shaft portion into a shaft hole portion of the holder when the operation lever is rotationally moved in a first direction using the locking portion as a fulcrum.

## Description

### [Technical Field]

The present invention relates to a clamping tool, an indexable cutting tool with a clamping tool, and a cutting insert.

Priority is claimed on Japanese Patent Application Nos. 2021-001675 and 2021-214809, filed January 7, 2021 and December 28, 2021, the contents of which are incorporated herein by reference.

### [Background Art]

In the related art, for example, an indexable cutting tool such as an indexable insert holder disclosed in Patent Documents 1 and 2 is known. The indexable cutting tool includes a so-called round piece type cutting insert having a circular cutting edge, and a holder to which the cutting insert is detachably attached. In this type of indexable cutting tool, in a case where a used portion of the cutting edge of the cutting insert is worn or chipped, and machining accuracy cannot be secured, an unused portion of the cutting edge is used for cutting by rotating the cutting insert around an insert central axis and reattaching the cutting insert to the holder. In the following description, rotating the cutting insert around the insert central axis and attaching the cutting insert to the holder while aligning the cutting insert in an insert circumferential direction in this way may be simply referred to as an "index".

In Patent Document 1, the following work is performed when indexing a round piece-shaped indexable insert (cutting insert). That is, when an insert is removed from a tool main body (holder) (when performing unclamping), a thin rod or the like is inserted into a conical hole from a lower side of the tool main body, and a lower surface of the insert is pushed up, thereby releasing fitting of a small-diameter tapered portion of the insert into the conical hole. In addition, when the insert is attached to the tool main body (when performing clamping), a top surface of the insert is hit with a hammer or the like to fit the small-diameter tapered portion of the insert into the conical hole.

In Patent Document 2, a shank of a tool bit (cutting insert) is formed by a spline having a shape corresponding to a recessed portion of a socket of a tool holder. In a case where a new cutting edge portion is required, the tool bit is indexed by a fixed amount (predetermined angle) around the insert central axis. Additionally, the tool bit is fixed to the tool holder by using an elongated bar-shaped clamp member, an adjusting screw, and a fastening screw.

### [Citation List]

### [Patent Documents]

[Patent Document 1]
   Japanese Examined Utility Model Application, Second Publication No. S55-53283
[Patent Document 2]
   Japanese Patent No. 3283521

### [Summary of Invention]

### [Technical Problem]

In Patent Document 1, when the insert is clamped, a part of the insert may be damaged or the fitted state (fixed state) may become unstable.

In Patent Document 2, each shape of the shank of the tool bit and the socket of the tool holder is complicated, which makes it difficult to manufacture each member. In addition, since constituent members of the tool include a clamp member and a plurality of screw members, the number of parts is large and a manufacturing cost increases.

An objective of the present invention is to provide a clamping tool, an indexable cutting tool with a clamping tool, and a cutting insert that can stably clamp a cutting insert to a holder while suppressing complication of structures of the cutting insert and the holder.

### [Solution to Problem]

According to one aspect of the present invention, there is provided a clamping tool for attaching a cutting insert to a holder or detaching a cutting insert from a holder, the cutting insert including a head portion having a circular cutting edge with an insert central axis as a center and a shaft portion disposed on a lower side of the head portion in an insert axial direction along the insert central axis, the clamping tool including: a first jaw portion configured to be locked to the holder; and an operation lever configured to be connected to the first jaw portion, in which the first jaw portion has a locking portion configured to be locked to the holder, and a first pressing portion configured to push the head portion downward in the insert axial direction and fit the shaft portion into a shaft hole portion of the holder when the operation lever is rotationally moved in a first direction using the locking portion as a fulcrum.

In the present invention, the cutting insert is fixed to the holder by fitting the shaft portion of the cutting insert into the shaft hole portion of the holder. A screw member or the like for clamping the cutting insert is unnecessary, and complication of structures of the cutting insert and the holder can be suppressed. Then, the clamping work of the cutting insert to the holder can be performed by using the clamping tool.

Specifically, when performing clamping to attach the cutting insert to the holder, the operation lever is rotationally moved in the first direction in a state in which the locking portion is locked to the holder. Accordingly, according to the principle of a lever (function of lever) in which the locking portion is used as a fulcrum, the first pressing portion of the clamping tool presses the head portion of the cutting insert downward, and the shaft portion of the cutting insert is stably fitted into the shaft hole portion of the holder. That is, when performing clamping, the locking portion functions as a fulcrum, the operation lever functions as a force point, and the first pressing portion functions as a point of application.

Compared with the configuration in the related art in which the cutting insert is clamped by hitting with a hammer or the like, according to the present invention, damage or the like of the cutting insert can be suppressed, and the fitted state (fixed state) of the shaft portion into the shaft hole portion can be more stabilized.

From the above, according to the present invention, it is possible to stably clamp the cutting insert to the holder while suppressing the complication of the structures of the cutting insert and the holder.

It is preferable that the clamping tool further includes a second jaw portion disposed below the first jaw portion in the insert axial direction, and the second jaw portion has a second pressing portion configured to push a part of the cutting insert upward in the insert axial direction and release fitting of the shaft portion into the shaft hole portion when the operation lever is rotationally moved in a second direction different from the first direction using the locking portion as a fulcrum.

In addition, according to one aspect of the present invention, there is provided a cutting insert including: a head portion having a circular cutting edge with an insert central axis as a center; a shaft portion disposed on a lower side of the head portion in an insert axial direction along the insert central axis and configured to be fitted into a shaft hole portion of a holder; and a contact portion configured to be pushed up by a clamping tool from a lower side in the insert axial direction.

In this case, the unclamping work of the cutting insert from the holder can be performed by using the clamping tool. Specifically, when performing unclamping to remove the cutting insert from the holder, the operation lever is rotationally moved in the second direction in a state in which the locking portion is locked to the holder. Accordingly, according to the principle of the lever in which the locking portion is used as a fulcrum, the second pressing portion of the clamping tool presses a part (contact portion) of the cutting insert upward, and the fitting of the shaft portion of the cutting insert into the shaft hole portion of the holder is stably released. That is, when performing unclamping, the locking portion functions as a fulcrum, the operation lever functions as a force point, and the second pressing portion functions as a point of application.

Compared with the configuration in the related art in which the cutting insert is unclamped by pushing up the lower surface of the cutting insert with a thin rod or the like, according to the present invention, jumping-out, dropping, loss, and the like of the cutting insert can be suppressed.

In addition, the clamping work and the unclamping work of the cutting insert can be performed by one (common) clamping tool. Therefore, it is easy to manage the clamping tool.

In the clamping tool, an outer diameter dimension of the shaft portion may be smaller than an outer diameter dimension of the head portion, the cutting insert may include a step portion configured to connect the head portion and the shaft portion, and an index portion disposed over a part of the step portion and a part of the head portion and recessed inward in an insert radial direction orthogonal to the insert central axis from an outer peripheral surface of each of the step portion and the head portion, a plurality of the index portions may be arranged in an insert circumferential direction around the insert central axis, and the second pressing portion may come into contact with at least one of the plurality of index portions.

In addition, the cutting insert may include a step portion configured to connect the head portion and the shaft portion having a smaller outer diameter dimension than the head portion, and an index portion disposed over a part of the step portion and a part of the head portion and recessed inward in an insert radial direction orthogonal to the insert central axis from an outer peripheral surface of each of the step portion and the head portion, a plurality of the index portions may be arranged in an insert circumferential direction around the insert central axis, and at least one of the plurality of index portions may be the contact portion.

In this case, a predetermined index portion among the plurality of index portions of the cutting insert is guided by a part of the holder, whereby the cutting insert is accurately aligned and indexed in the insert circumferential direction.

When the cutting insert is unclamped, the second pressing portion pushes up at least one (contact portion) other than the predetermined index portion among the plurality of index portions, whereby the fitting of the shaft portion of the cutting insert into the shaft hole portion of the holder is released. That is, the index portion of the cutting insert can be used when performing indexing and when performing unclamping, and the structure is further simplified.

In the clamping tool, it is preferable that the index portion has a surface located outward in the insert radial direction toward an upper side in the insert axial direction.

In this case, the second pressing portion of the clamping tool is brought into contact with the surface of the index portion, whereby the cutting insert can be stably pushed up by the second pressing portion. The cutting insert can be unclamped more stably.

In the cutting insert, it is preferable that the number of the index portions is a multiple of 4.

For example, a pair of index portions facing opposite sides of each other in the insert radial direction are guided by the holder, so that the cutting insert is indexed to the holder. In such a case, in a case where the number of the index portions is a multiple of 4 as in the above configuration, another index portion located between the pair of index portions in the insert circumferential direction around the insert central axis can be used as the contact portion with which the clamping tool comes into contact. In a case where the pair of index portions face a tool width direction, the other index portion faces a tool tip side (tool front surface), which makes it easy to make contact with the clamping tool. That is, the unclamping work of the cutting insert is facilitated.

In the clamping tool, an outer diameter dimension of the shaft portion may be smaller than an outer diameter dimension of the head portion, the cutting insert may include a step portion configured to connect the head portion and the shaft portion, and the second pressing portion may come into contact with the step portion.

In addition, the cutting insert may include a step portion configured to connect the head portion and the shaft portion having a smaller outer diameter dimension than the head portion, and the step portion may be the contact portion.

In this case, when the cutting insert is unclamped, the second pressing portion pushes up the step portion (contact portion), whereby the fitting of the shaft portion of the cutting insert into the shaft hole portion of the holder is stably released.

In the clamping tool, the second pressing portion may come into contact with a lower surface of the shaft portion.

In addition, in the cutting insert, a lower surface of the shaft portion may be the contact portion.

In this case, when the cutting insert is unclamped, the second pressing portion pushes up the lower surface (contact portion) of the shaft portion, whereby the fitting of the shaft portion of the cutting insert into the shaft hole portion of the holder is stably released.

In the clamping tool, it is preferable that the first jaw portion has a second pressing portion configured to push a lower surface of the shaft portion upward in the insert axial direction and release fitting of the shaft portion into the shaft hole portion when the operation lever is rotationally moved in the first direction using the locking portion as a fulcrum.

In this case, the unclamping work of the cutting insert from the holder can be performed by using the clamping tool. Specifically, when performing unclamping to remove the cutting insert from the holder, the operation lever is rotationally moved in the first direction in a state in which the locking portion is locked to the holder. Accordingly, according to the principle of the lever in which the locking portion is used as a fulcrum, the second pressing portion of the clamping tool presses the lower surface (contact portion) of the shaft portion of the cutting insert upward, and the fitting of the shaft portion of the cutting insert into the shaft hole portion of the holder is stably released. That is, when performing unclamping, the locking portion functions as a fulcrum, the operation lever functions as a force point, and the second pressing portion functions as a point of application.

Compared with the configuration in the related art in which the cutting insert is unclamped by pushing up the lower surface of the cutting insert with a thin rod or the like, according to the present invention, jumping-out, dropping, loss, and the like of the cutting insert can be suppressed.

In addition, the clamping work and the unclamping work of the cutting insert can be performed by one (common) clamping tool. Therefore, it is easy to manage the clamping tool.

In the clamping tool, it is preferable that the head portion has a pressed surface located above the cutting edge in the insert axial direction, and the first pressing portion comes into contact with the pressed surface.

In this case, when the cutting insert is clamped, the first pressing portion comes into contact with the pressed surface above the cutting edge. Therefore, contact between the first pressing portion and the cutting edge is suppressed. Therefore, unintentional chipping of an edge tip when performing clamping can be suppressed.

In the clamping tool, it is preferable that the first pressing portion protrudes downward from a lower surface of the first jaw portion that faces downward in the insert axial direction.

In this case, when the cutting insert is clamped, the first pressing portion can be stably brought into contact with a predetermined position of the head portion of the cutting insert. Therefore, the cutting insert is stably clamped. In addition, the contact between the first pressing portion and the cutting edge can be suppressed.

In the clamping tool, it is preferable that the locking portion extends in a predetermined direction among insert radial directions orthogonal to the insert central axis, and the locking portion has a dimension in the insert axial direction larger than a dimension in a direction orthogonal to each of the predetermined direction and the insert axial direction.

In this case, it is possible to secure a large geometrical moment of inertia of the locking portion when performing clamping and unclamping while simplifying the structure of the locking portion. Therefore, each function of clamping and unclamping by the clamping tool is stabilized.

In the clamping tool, it is preferable that the first jaw portion extends in a predetermined direction among insert radial directions orthogonal to the insert central axis, and when viewed from a direction orthogonal to the predetermined direction and the insert axial direction, an angle between the predetermined direction in which the first jaw portion extends and a direction in which the operation lever extends is 60° or greater and 180° or less.

In a case where the above angle is 60° or greater, when the operation lever is rotationally moved in the first direction in performing clamping, a force for pulling the first jaw portion upward is less likely to be generated. Therefore, a force for pressing the head portion of the cutting insert downward by the first pressing portion is stabilized. In addition, in a case where the operation lever is rotationally moved in the second direction when performing unclamping, a force for pushing the second jaw portion downward is less likely to be generated. Therefore, a force for pressing a part of the cutting insert upward by the second pressing portion is stabilized.

In addition, in a case where the angle is 180° or less, when the operation lever is rotationally moved in the first direction in performing clamping, the operation lever can be operated in a direction of being separated from the cutting insert in a predetermined direction (can be operated by an operator with a pulling force). For example, safety is improved compared to a case where the operation lever is operated in a direction to approach the cutting insert (operated by the operator with a pushing force) when performing clamping unlike the above configuration. In addition, in a case where the operation lever is rotationally moved in the second direction when performing unclamping, a force in a direction of separating the second jaw portion from the cutting insert in a predetermined direction is less likely to be generated. Therefore, the cutting insert can be stably unclamped by the second pressing portion.

In the clamping tool, it is preferable that the first jaw portion and the operation lever are detachably connected to each other.

For example, there may be a plurality of types of cutting inserts having different insert shapes, insert sizes, and the like. In such a case, even though a plurality of types of the first jaw portions need to be prepared for stable clamping of each cutting insert, according to the above configuration of the present invention, the operation lever can be used as a common part. For example, compared to a case where a plurality of types of the clamping tools themselves are prepared, according to the above configuration, a tool storage space can be saved, and a manufacturing cost can also be reduced. Then, it is possible to cope with various insert shapes, insert sizes, and the like by appropriately exchanging the plurality of types of first jaw portions and attaching them to the operation lever.

In addition, according to one aspect of the present invention, there is provided an indexable cutting tool with a clamping tool including: the cutting insert; the holder; and the clamping tool described above, in which the holder has a first locked portion to which the locking portion is locked, and the first locked portion is a hole recessed from an outer surface of the holder and configured to receive the locking portion.

In this case, the locking portion of the clamping tool is locked to the holder by being inserted into the hole-shaped first locked portion. The first locked portion is merely a hole, which simplifies the structure of the holder.

In the indexable cutting tool with a clamping tool, it is preferable that the first locked portion has a dimension in the insert axial direction larger than a dimension in a direction orthogonal to each of a predetermined direction in which the locking portion is inserted into the first locked portion and the insert axial direction.

In this case, since a hole shape (opening shape) of the first locked portion is a vertically elongated shape that is long in an up-down direction, the locking portion to be inserted into the first locked portion can also have the vertically elongated shape. Accordingly, it is possible to secure a large geometrical moment of inertia of the locking portion when performing clamping and unclamping, and each function of clamping and unclamping by the clamping tool is stabilized.

In addition, according to one aspect of the present invention, there is provided an indexable cutting tool with a clamping tool including: the cutting insert; the holder; and the clamping tool described above, in which the holder has a cylindrical portion extending in the insert axial direction, the cylindrical portion has a hole portion extending in the insert axial direction inside the cylindrical portion and in which the shaft hole portion is disposed, and a through hole penetrating a surrounding wall of the cylindrical portion in an insert radial direction orthogonal to the insert central axis and communicating with the hole portion, and the second pressing portion is configured to come into contact with the lower surface of the shaft portion by inserting at least a part of the second jaw portion into an inside of the hole portion through the through hole.

In this case, the second pressing portion can be brought into contact with the lower surface of the shaft portion while the total length of the second jaw portion is suppressed to be small to have a compact structure.

In the indexable cutting tool with a clamping tool, it is preferable that the through hole has a dimension in the insert axial direction larger than a dimension in an insert circumferential direction around the insert central axis.

In this case, when the operation lever is rotationally moved, a large distance is secured for allowing the second jaw portion to move up and down in the through hole. Therefore, the unclamping work of the cutting insert is stably performed.

In addition, according to one aspect of the present invention, there is provided an indexable cutting tool with a clamping tool including: the cutting insert; the holder; and the clamping tool described above, in which the holder has a cylindrical portion extending in the insert axial direction, the cylindrical portion has a hole portion extending in the insert axial direction inside the cylindrical portion and in which the shaft hole portion is disposed, and a second locked portion penetrating a surrounding wall of the cylindrical portion in an insert radial direction orthogonal to the insert central axis and communicating with the hole portion, and the second pressing portion is configured to come into contact with the lower surface of the shaft portion by inserting the locking portion into the second locked portion.

In this case, the operation lever is rotationally moved in the first direction in a state in which the locking portion of the first jaw portion is inserted into the second locked portion of the holder and the locking portion is locked to the second locked portion. Accordingly, according to the principle of the lever in which the locking portion is used as a fulcrum, the second pressing portion of the first jaw portion presses the lower surface (contact portion) of the shaft portion of the cutting insert upward, and the fitting of the shaft portion of the cutting insert into the shaft hole portion of the holder is stably released. That is, when performing unclamping, the locking portion functions as a fulcrum, the operation lever functions as a force point, and the second pressing portion functions as a point of application.

### [Advantageous Effects of Invention]

According to the clamping tool, the indexable cutting tool with a clamping tool, and the cutting insert according to the aspects of the present invention, it is possible to stably clamp the cutting insert to the holder while suppressing the complication of the structures of the cutting insert or the holder.

### [Brief Description of Drawings]

FIG. 1 is a perspective view showing a cutting insert and a holder of an indexable cutting tool with a clamping tool according to a first embodiment.
FIG. 2 is a front view showing the cutting insert and the holder of the indexable cutting tool with a clamping tool.
FIG. 3 is a top view showing a part of the indexable cutting tool with a clamping tool.
FIG. 4 is a side view showing a part of the indexable cutting tool with a clamping tool.
FIG. 5 is a cross-sectional view showing a V-V cross section of FIG. 3.
FIG. 6 is a cross-sectional view showing a VI-VI cross section of FIG. 4.
FIG. 7 is a perspective view showing the cutting insert.
FIG. 8 is a top view showing the cutting insert.
FIG. 9 is a side view showing the cutting insert.
FIG. 10 is a side view showing the cutting insert, and is a view of the cutting insert viewed from an insert radial direction different from that in FIG. 9.
FIG. 11 is a perspective view showing a part of the holder.
FIG. 12 is a top view showing a part of the holder.
FIG. 13 is a cross-sectional view showing a XIII-XIII cross section of FIG. 12.
FIG. 14 is a cross-sectional view showing a XIV-XIV cross section in FIG. 12.
FIG. 15 is a front view showing the indexable cutting tool with a clamping tool according to the first embodiment.
FIG. 16 is a side view showing a part of the indexable cutting tool with a clamping tool according to the first embodiment.
FIG. 17 is a partial cross-sectional view showing a XVII-XVII cross section of FIG. 15.
FIG. 18 is a side view (plan view) showing a clamping tool according to the first embodiment.
FIG. 19 is a front view showing an indexable cutting tool with a clamping tool according to a second embodiment.
FIG. 20 is a partial cross-sectional view showing a XX-XX cross section of FIG. 19.
FIG. 21 is a side view (plan view) showing a clamping tool according to the second embodiment.
FIG. 22 is a side view showing a cutting insert of an indexable cutting tool with a clamping tool according to a third embodiment.
FIG. 23 is a side view showing a part of the indexable cutting tool with a clamping tool according to the third embodiment.
FIG. 24 is a cross-sectional view showing a part of the indexable cutting tool with a clamping tool according to the third embodiment.
FIG. 25 is a side view (plan view) showing a clamping tool according to a fourth embodiment.
FIG. 26 is a front view showing an indexable cutting tool with a clamping tool according to the fourth embodiment, and shows a usage method of the clamping tool when clamping a cutting insert.
FIG. 27 is a partial cross-sectional view showing a XXVII-XXVII cross section of FIG. 26.
FIG. 28 is a front view showing the indexable cutting tool with a clamping tool according to the fourth embodiment, and shows a usage method of the clamping tool when unclamping a cutting insert.
FIG. 29 is a partial cross-sectional view showing a XXIX-XXIX cross section of FIG. 28.
FIG. 30 is a side view showing a clamping tool according to a fifth embodiment.
FIG. 31 is a bottom view showing the clamping tool according to the fifth embodiment.
FIG. 32 is a front view showing an indexable cutting tool with a clamping tool according to the fifth embodiment, and shows a usage method of the clamping tool when clamping a cutting insert.
FIG. 33 is a partial cross-sectional view showing a XXXIII-XXXIII cross section of FIG. 32.
FIG. 34 is a front view showing the indexable cutting tool with a clamping tool according to the fifth embodiment, and shows a usage method of the clamping tool when unclamping a cutting insert.
FIG. 35 is a partial cross-sectional view showing a XXXV-XXXV cross section of FIG. 34.

### [Description of Embodiments]

### <First Embodiment>

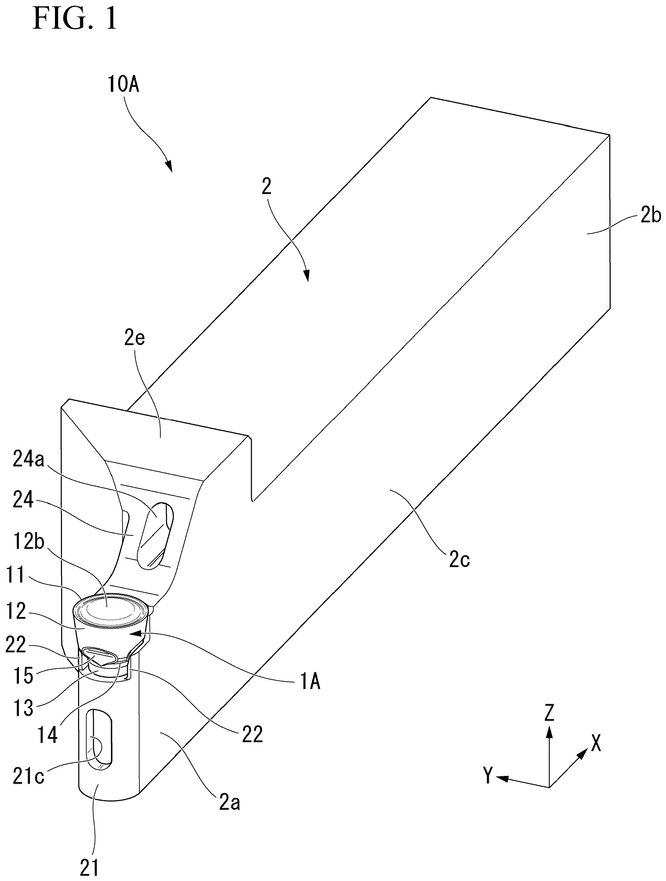

A clamping tool 3A, an indexable cutting tool with a clamping tool 10A (hereinafter, may be simply referred to as an indexable cutting tool 10A), and a cutting insert 1A according to a first embodiment of the present invention will be described with reference to FIGS. 1 to 18.

The indexable cutting tool 10A is, for example, an indexable turning tool that turns a work material (not shown). Specifically, the indexable cutting tool 10A according to the present embodiment is an indexable insert holder for outer diameter and inner diameter machining, which performs rough copying on an outer peripheral surface, an inner peripheral surface, or the like of the work material. The indexable cutting tool 10A is detachably attached to a tool rest of a machine tool, such as a lathe (not shown). The work material to be cut by the indexable cutting tool 10A is, for example, a metal material made of a heat resistant alloy used for aircraft engine parts and the like.

As shown in FIGS. 1 to 6 and 15 to 17, the indexable cutting tool 10A includes a cutting insert 1A having a multi-stage columnar shape with an insert central axis C as a center, a holder 2 to which the cutting insert 1A is detachably attached, and a clamping tool 3A that attaches and detaches the cutting insert 1A to and from the holder 2.

The cutting insert 1A includes a head portion 12 having a circular cutting edge 11 with the insert central axis C as a center, a shaft portion 13 having a smaller outer diameter dimension than the head portion 12, a step portion 14 that connects the head portion 12 and the shaft portion 13, and an index portion (contact portion) 15.

The holder 2 has a substantially prismatic shape and extends along a tool central axis (not shown). The holder 2 includes a cylindrical portion 21, a guide wall portion 22, a head portion restraining wall portion 23, and a front wall portion 24. A part of the cylindrical portion 21, the guide wall portion 22, the head portion restraining wall portion 23, and the front wall portion 24 is disposed at a first end portion 2a of both end portions of the holder 2, that is, the first end portion 2a and a second end portion 2b.

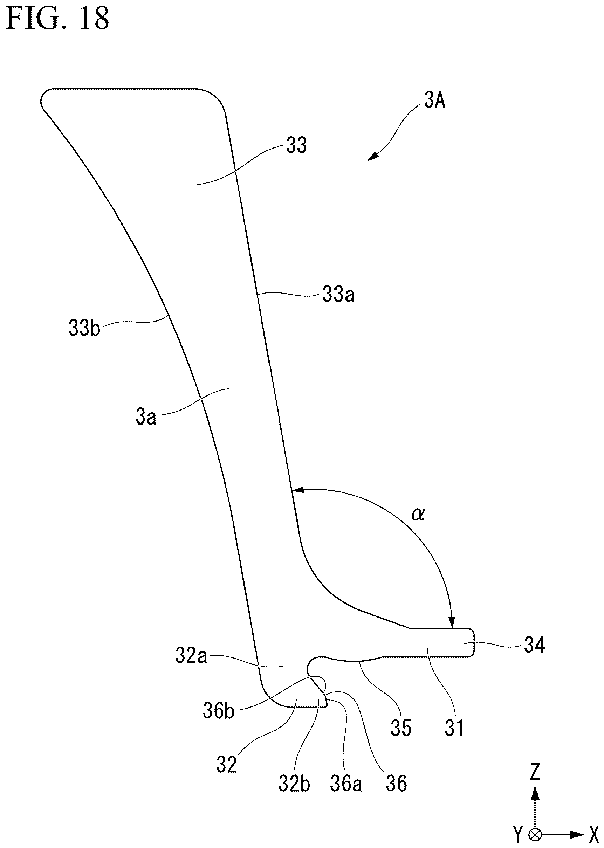

As shown in FIG. 18, the clamping tool 3A is configured of a single plate-like member. The clamping tool 3A includes an upper jaw portion 31, a lower jaw portion 32, and an operation lever 33 connected to the upper jaw portion 31 and the lower jaw portion 32. In the present embodiment, the upper jaw portion 31 corresponds to the first jaw portion, and the lower jaw portion 32 corresponds to the second jaw portion.

### [Definition of Directions]

In each figure, in the present embodiment, a direction in which the tool central axis of the holder 2 extends is referred to as a tool axial direction. In the XYZ orthogonal coordinate system shown in each figure, the tool axial direction corresponds to an X axis direction. In the tool axial direction, a direction (-X side) from the second end portion 2b of the holder 2 toward the first end portion 2a is referred to as a tool tip side or simply referred to as a tip side, and a direction (+X side) from the first end portion 2a toward the second end portion 2b is referred to as a tool posterior end side or simply referred to as a posterior end side.

A direction in which a pair of side surfaces 2c and 2d of the holder 2 face in a direction orthogonal to the tool central axis is referred to as a tool width direction (left-right direction). The tool width direction corresponds to a Y axis direction. In the tool width direction, a direction (+Y side) from one side surface 2c toward the other side surface 2d is referred to as a left side, and a direction (-Y side) from the other side surface 2d toward the one side surface 2c is referred to as a right side.

A direction orthogonal to the tool axial direction and the tool width direction is referred to as an up-down direction. The up-down direction corresponds to a Z axis direction. The up-down direction is a direction in which a top surface 2e and a bottom surface 2f of the holder 2 face. In the up-down direction, a direction (+Z side) from the bottom surface 2f toward the top surface 2e is referred to as an upper side, and a direction (-Z side) from the top surface 2e toward the bottom surface 2f is referred to as a lower side.

The insert central axis C of the cutting insert 1A extends along the up-down direction. That is, the insert axial direction along the insert central axis C is the same as the up-down direction. Therefore, in the present embodiment, the up-down direction may be referred to as the insert axial direction. In the insert axial direction, the head portion 12 and the shaft portion 13 are disposed at positions different from each other. In the insert axial direction, a direction (+Z side) from the shaft portion 13 toward the head portion 12 is an upper side, and a direction (-Z side) from the head portion 12 toward the shaft portion 13 is a lower side.

A direction orthogonal to the insert central axis C is referred to as an insert radial direction. In the insert radial direction, a direction approaching the insert central axis C is referred to as inward in the insert radial direction, and a direction away from the insert central axis C is referred to as outward in the insert radial direction.

A direction of turning around the insert central axis C is referred to as an insert circumferential direction.

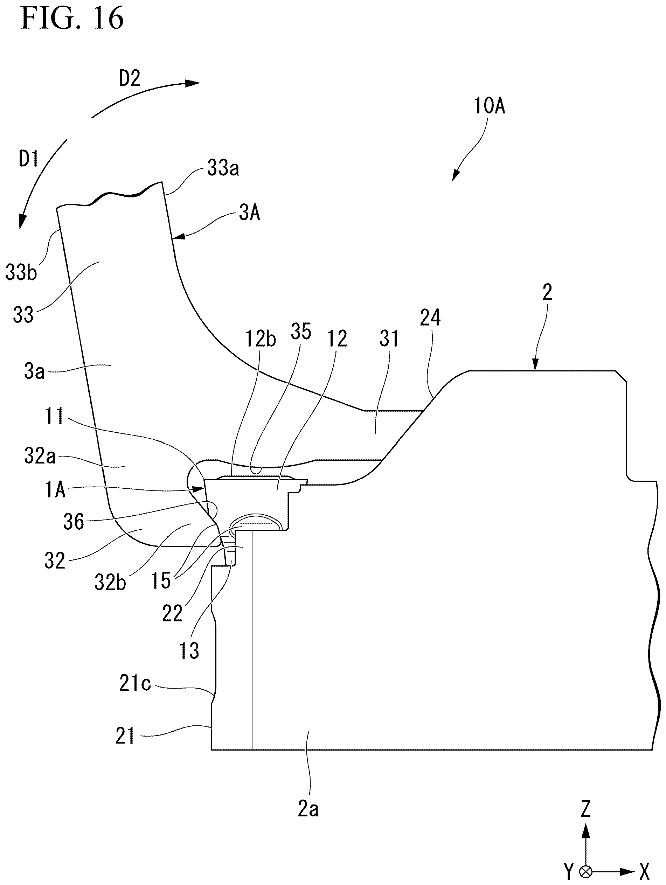

As shown in FIGS. 16 to 18, the upper jaw portion 31 of the clamping tool 3A extends in a predetermined direction in the insert radial direction. In the present embodiment, this predetermined direction corresponds to the X axis direction. The predetermined direction may be rephrased as an extension direction of the upper jaw portion (first jaw portion) 31. In the predetermined direction, a direction (+X side) in which the upper jaw portion 31 extends from a connection portion between the upper jaw portion 31 and the operation lever 33 is referred to as one side in the predetermined direction, and an opposite direction (-X side) is referred to as the other side in the predetermined direction. The one side in the predetermined direction may be rephrased as a tip side (tip side in the extension direction) of the upper jaw portion 31. The other side in the predetermined direction may be rephrased as a posterior end side (posterior end side in the extension direction) of the upper jaw portion 3 1. In the present embodiment, the predetermined direction is the same direction as the tool axial direction. Specifically, the one side in the predetermined direction (tip side of the upper jaw portion 31) corresponds to the tool posterior end side, and the other side in the predetermined direction (posterior end side of the upper jaw portion 31) corresponds to the tool tip side.

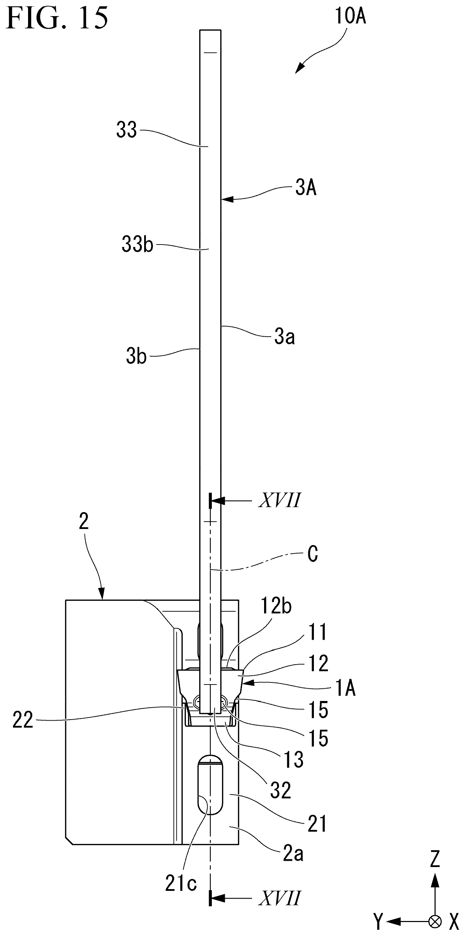

As shown in FIG. 15, a plate thickness direction of the clamping tool 3A corresponds to the Y axis direction. The plate thickness direction is a direction orthogonal to each of the predetermined direction and the insert axial direction (up-down direction). The plate thickness direction may be paraphrased as a left-right direction. In the present embodiment, the plate thickness direction of the clamping tool 3A is the same direction as the tool width direction. In the plate thickness direction, a direction (+Y side) from one plate surface 3a of the clamping tool 3A toward the other plate surface 3b is referred to as a left side, and a direction (-Y side) from the other plate surface 3b toward the one plate surface 3a is referred to as a right side.

In the present embodiment, the left side, the right side, the upper side, and the lower side are simply names for describing a relative positional relationship of each portion, and a disposition relationship for an actual use may be disposition relationships other than the disposition relationship indicated by these names.

### [Cutting Insert]

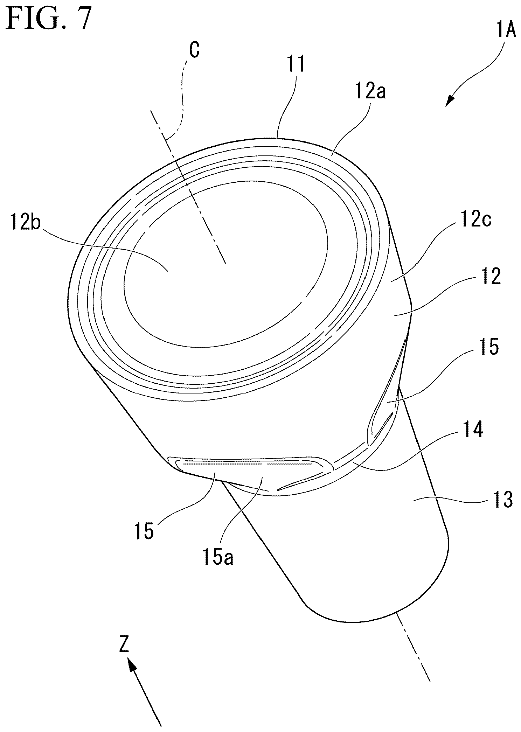

The cutting insert 1A is made of, for example, cemented carbide. The cutting insert 1A is removably fixed to the first end portion 2a (that is, a tip portion) of the holder 2. As shown in FIGS. 7 to 10, the cutting insert 1A has a multi-stage columnar shape in which outer diameters of respective portions in the insert axial direction are different from each other. The cutting insert 1A according to the present embodiment is a so-called round piece insert.

The head portion 12 has a columnar shape with the insert central axis C as a center. An outer peripheral surface of the head portion 12 has an annular shape with the insert central axis C as a center, and extends in the insert circumferential direction. The outer peripheral surface of the head portion 12 has a tapered shape that increases in diameter toward an upper side in the insert axial direction. That is, the outer diameter (outer diameter dimension) of the head portion 12 increases toward the upper side in the insert axial direction.

The head portion 12 has a cutting edge 11, a rake face 12a, a pressed surface 12b, and a flank face 12c.

The cutting edge 11 is disposed on a ridge portion where the outer peripheral surface and an upper surface of the head portion 12 are connected. The cutting edge 11 extends in the insert circumferential direction. The cutting edge 11 is disposed on an outer peripheral portion of an upper end of the head portion 12 over the entire circumference. The cutting edge 11 is located on the outermost side of the head portion 12 in the insert radial direction. The cutting edge 11 is a portion located on the outermost side of the cutting insert 1A in the insert radial direction.

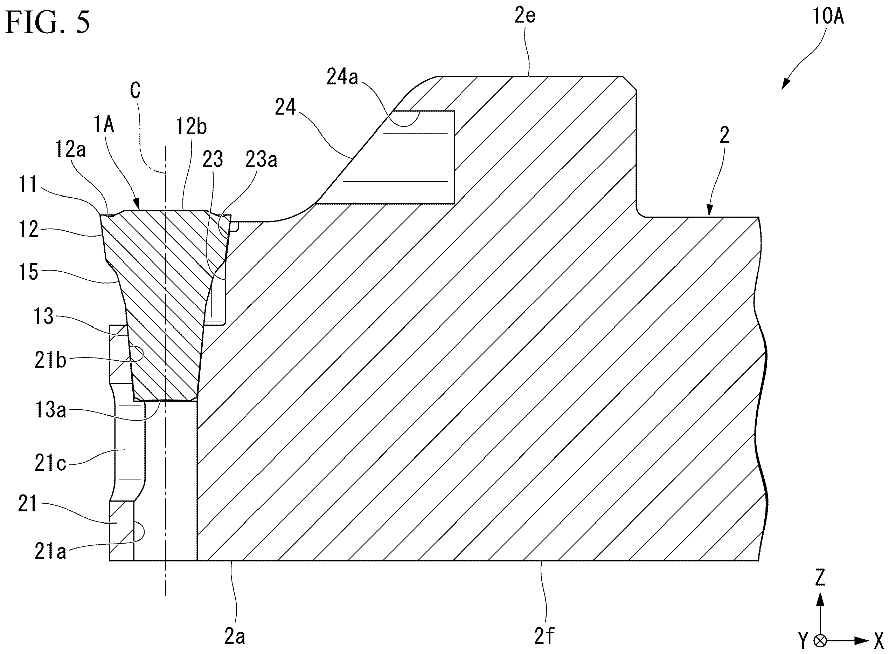

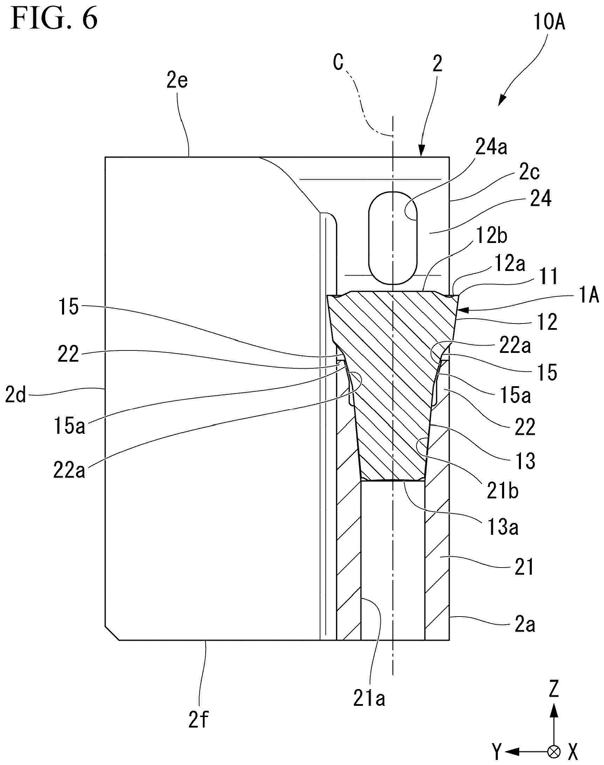

The rake face 12a is a portion of the upper surface of the head portion 12 that is located on the outer peripheral portion. The rake face 12a is disposed inside the cutting edge 11 in the insert radial direction and is connected to the cutting edge 11. As shown in FIGS. 5 and 6, a portion of the rake face 12a adjacent to the cutting edge 11 has an inclined surface shape that is located downward in the insert axial direction toward the inner side in the insert radial direction. That is, a rake angle of the cutting edge 11 is a positive angle (regular angle).

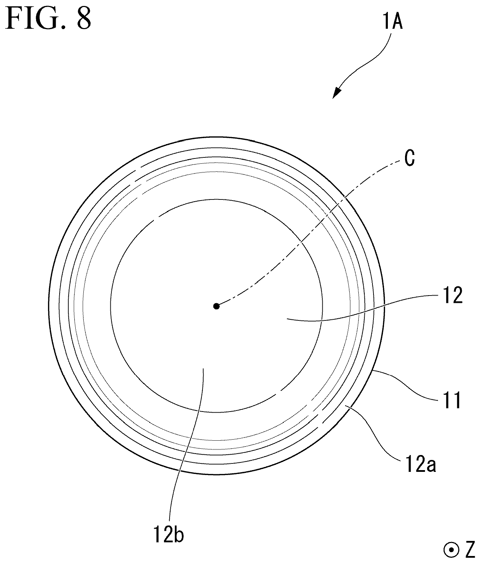

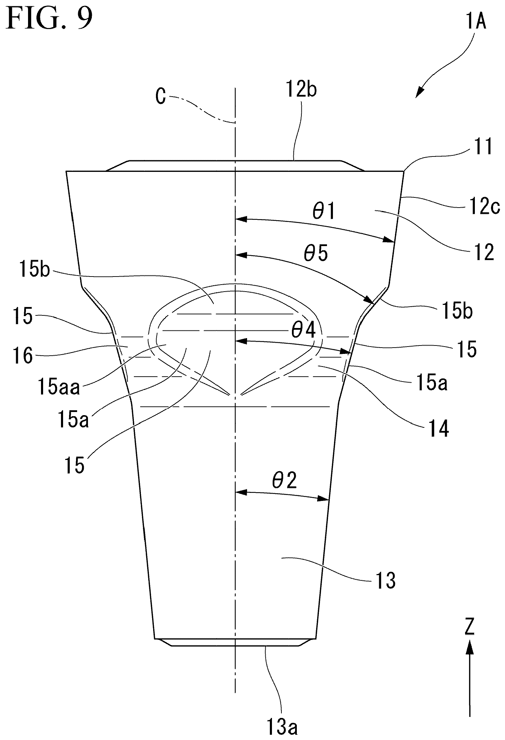

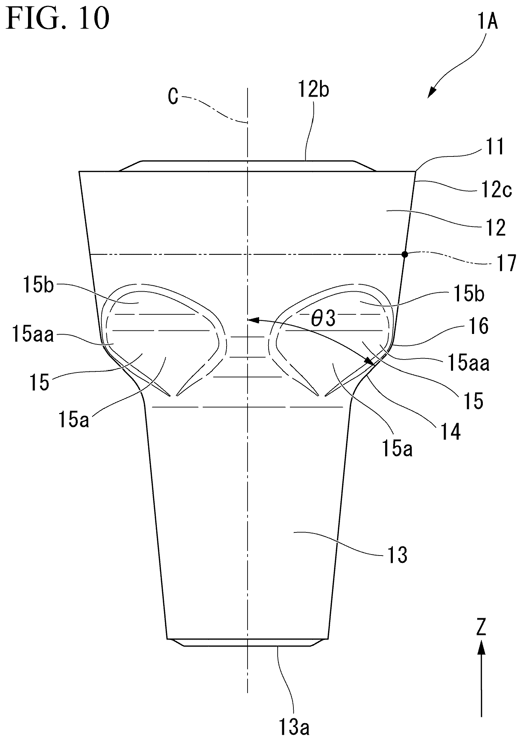

As shown in FIGS. 7 and 8, the pressed surface 12b is a portion of the upper surface of the head portion 12 that is located on the inner side in the insert radial direction with respect to the rake face 12a. The pressed surface 12b has a circular surface shape with the insert central axis C as a center. The pressed surface 12b has a planar shape spreading in a direction perpendicular to the insert central axis C. As shown in FIGS. 9 and 10, the pressed surface 12b is located above the cutting edge 11 in the insert axial direction. A distance between the pressed surface 12b and the cutting edge 11 in the insert axial direction is, for example, 0.05 mm or greater and 1.0 mm or less. The pressed surface 12b is located on the uppermost side of the head portion 12 in the insert axial direction. The pressed surface 12b is a portion located on the uppermost side of the cutting insert 1A in the insert axial direction.

The flank face 12c is a portion located at an upper end portion of the outer peripheral surface of the head portion 12. The flank face 12c is disposed on the lower side of the cutting edge 11 in the insert axial direction and is connected to the cutting edge 11. The flank face 12c has an inclined surface shape that is located inward in the insert radial direction toward the lower side in the insert axial direction. That is, the cutting edge 11 has a clearance angle.

The shaft portion 13 is disposed on the lower side of the head portion 12 in the insert axial direction. The shaft portion 13 has a columnar shape with the insert central axis C as a center. A dimension in the insert axial direction of the shaft portion 13 is larger than a dimension in the insert axial direction of the head portion 12. An outer peripheral surface of the shaft portion 13 has an annular shape with the insert central axis C as a center, and extends in the insert circumferential direction. The outer peripheral surface of the shaft portion 13 has a tapered shape that increases in diameter toward an upper side in the insert axial direction. That is, the outer diameter of the shaft portion 13 increases toward the upper side in the insert axial direction.

As shown in FIG. 9, a difference between an inclination angle θ1 of the outer peripheral surface of the head portion 12 with respect to the insert central axis C and an inclination angle Θ2 of the outer peripheral surface of the shaft portion 13 with respect to the insert central axis C is within 5° in a side view as viewed from the insert radial direction. That is, the inclination angle θ1 and the inclination angle θ2 are substantially the same angle.

The term "side view as viewed from the insert radial direction" described in the present embodiment may be appropriately rephrased as "a vertical sectional view including the insert central axis C", "a vertical sectional view along the insert central axis C", or the like.

The shaft portion 13 has a lower surface 13a. The lower surface 13a has a circular surface shape with the insert central axis C as a center. The lower surface 13a has a planar shape spreading in a direction perpendicular to the insert central axis C. The lower surface 13a is located on the lowermost side of the shaft portion 13 in the insert axial direction. The lower surface 13a is a portion located on the lowermost side of the cutting insert 1A in the insert axial direction.

As shown in FIG. 10, the step portion 14 is disposed between the head portion 12 and the shaft portion 13 in the insert axial direction, and is connected to the head portion 12 and the shaft portion 13. That is, an upper end portion of the step portion 14 is connected to a lower end portion of the head portion 12, and a lower end portion of the step portion 14 is connected to an upper end portion of the shaft portion 13. A dimension in the insert axial direction of the step portion 14 is smaller than the dimension in the insert axial direction of the head portion 12 and the dimension of the shaft portion 13 in the insert axial direction. An outer diameter dimension of the step portion 14 is equal to or smaller than the outer diameter dimension of the head portion 12, and is equal to or larger than the outer diameter dimension of the shaft portion 13.

The outer peripheral surface of the step portion 14 has a tapered shape that increases in diameter toward an upper side in the insert axial direction. That is, the outer diameter of the step portion 14 increases toward the upper side in the insert axial direction. As shown in FIGS. 9 and 10, an inclination angle θ3 of the outer peripheral surface of the step portion 14 with respect to the insert central axis C is larger than the inclination angle θ1 of the head portion 12 and the inclination angle Θ2 of the shaft portion 13 in the side view as viewed from the insert radial direction. Therefore, the outer peripheral surface of the step portion 14 faces outward in the insert radial direction and faces downward in the insert axial direction. Specifically, the inclination angle θ3 is, for example, 15° or greater and 60° or less.

The index portion 15 is used to align the cutting insert 1A in the insert circumferential direction when the cutting insert 1A is rotationally moved in the insert circumferential direction and reattached to the holder 2, that is, when performing indexing.

The index portion 15 is disposed over a part of the step portion 14 and a part of the head portion 12, and is recessed inward in the insert radial direction from each of the outer peripheral surfaces of the step portion 14 and the head portion 12. Specifically, the index portion 15 is disposed over a portion other than the lower end portion of the step portion 14 and the lower end portion of the head portion 12 in the insert axial direction.

A plurality of the index portions 15 are arranged in the insert circumferential direction. The plurality of index portions 15 are disposed at a distance from each other in the insert circumferential direction. The number of the index portions 15 is a multiple of 4. In the present embodiment, four index portions 15 are disposed at equal pitches in the insert circumferential direction. The plurality of index portions 15 include a pair of index portions 15 that are disposed at 180° rotationally symmetrical positions with the insert central axis C as a center. In the present embodiment, two sets of the pair of index portions 15 are provided.

Each index portion 15 has surfaces 15a and 15b located outward in the insert radial direction toward the upper side in the insert axial direction. Specifically, each index portion 15 has a planar alignment surface 15a facing outward in the insert radial direction and an upper side surface 15b disposed on an upper side of the alignment surface 15a in the insert axial direction.

As shown in FIG. 9, when the index portion 15 is viewed from the front in the insert radial direction, the alignment surface 15a has a substantially triangular shape projecting downward in the insert axial direction, and specifically, has a substantially isosceles triangular shape. A dimension of the alignment surface 15a in the insert circumferential direction is larger than a dimension of the alignment surface 15a in the insert axial direction. The dimension of the alignment surface 15a in the insert circumferential direction increases toward the upper side in the insert axial direction.

The alignment surface 15a is located outward in the insert radial direction toward the upper side in the insert axial direction. That is, the alignment surface 15a has an inclined surface shape that is inclined with respect to the insert central axis C. The inclination angle Θ2 of the outer peripheral surface of the shaft portion 13 with respect to the insert central axis C is smaller than an inclination angle Θ4 of the alignment surface 15a with respect to the insert central axis C in the side view as viewed from the insert radial direction. That is, the alignment surface 15a has a larger inclination with respect to the insert central axis C than the outer peripheral surface of the shaft portion 13. Specifically, the inclination angle Θ4 is, for example, 5° or greater and 20° or less.

As shown in FIG. 10, in the insert axial direction, an upper end portion of the alignment surface 15a is located above a boundary portion 16 between the head portion 12 and the step portion 14, and is located below an intermediate point 17 between the boundary portion 16 and the cutting edge 11.

The alignment surface 15a has a maximum perimeter portion 15aa with the largest dimension in the insert circumferential direction. A position of the maximum perimeter portion 15aa in the insert axial direction is the same as a position of the boundary portion 16 in the insert axial direction.

As shown in FIG. 9, when the index portion 15 is viewed from the front in the insert radial direction, the upper side surface 15b has a substantially triangular shape projecting upward in the insert axial direction, and specifically, has a substantially isosceles triangular shape. A dimension in the insert circumferential direction of the upper side surface 15b is larger than a dimension in the insert axial direction of the upper side surface 15b. The dimension in the insert circumferential direction of the alignment surface 15a is larger than a dimension in the insert circumferential direction of the upper side surface 15b. The dimension in the insert axial direction of the alignment surface 15a is larger than the dimension in the insert axial direction of the upper side surface 15b. The dimension of the upper side surface 15b in the insert circumferential direction increases toward the lower side in the insert axial direction. The upper side surface 15b is disposed at the same position as the lower end portion of the head portion 12 in the insert axial direction.

The upper side surface 15b is located outward in the insert radial direction toward the upper side in the insert axial direction. That is, the upper side surface 15b has an inclined surface shape that is inclined with respect to the insert central axis C. The upper side surface 15b has a planar shape, and faces outward in the insert radial direction and downward in the insert axial direction. An inclination angle θ5 of the upper side surface 15b with respect to the insert central axis C is larger than the inclination angle Θ4 of the alignment surface 15a with respect to the insert central axis C in the side view as viewed from the insert radial direction. That is, the upper side surface 15b has a larger inclination with respect to the insert central axis C than the alignment surface 15a. Specifically, the inclination angle θ5 is, for example, 20° or greater and 60° or less.

In the present embodiment, at least one of the plurality of index portions 15 arranged in the insert circumferential direction functions as the contact portion 15. That is, the cutting insert 1A includes the contact portion 15. The contact portion 15 is a portion that is pushed up by the clamping tool 3A from the lower side in the insert axial direction when the cutting insert 1A is unclamped.

### [Holder]

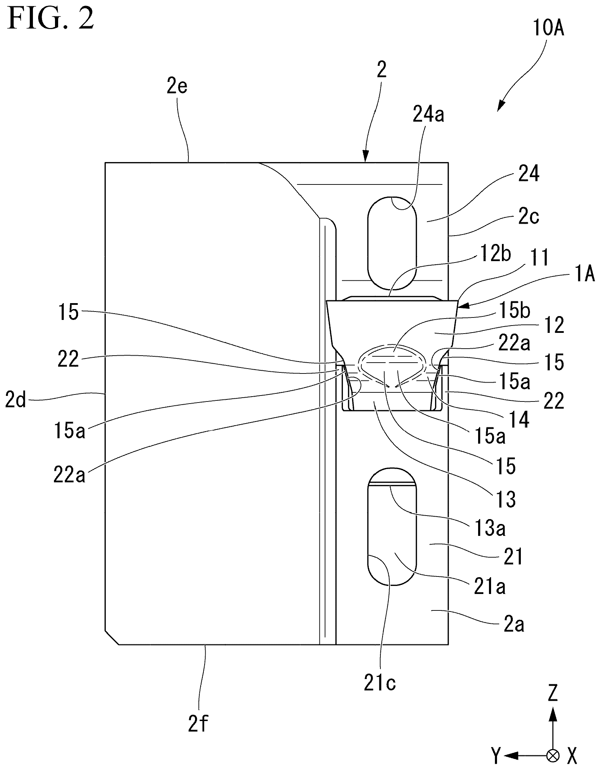

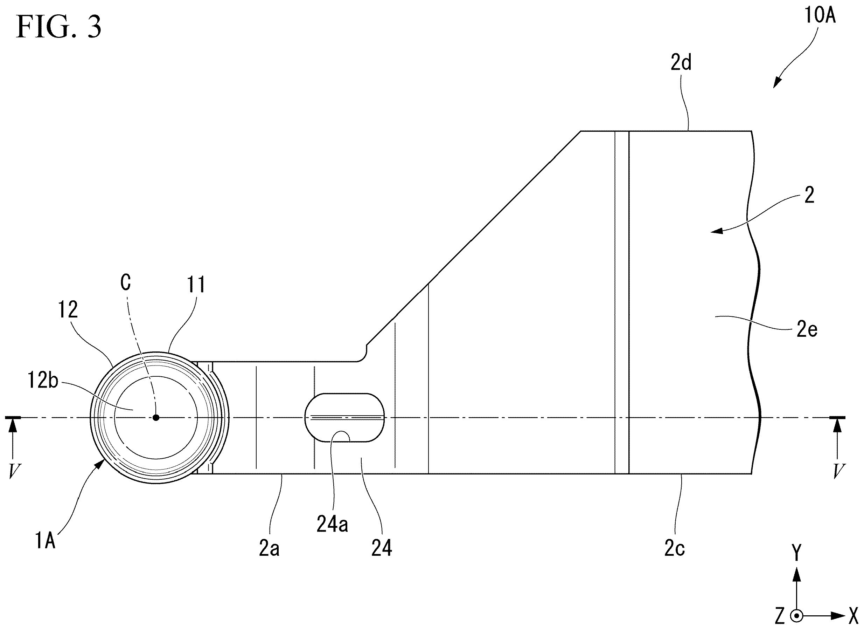

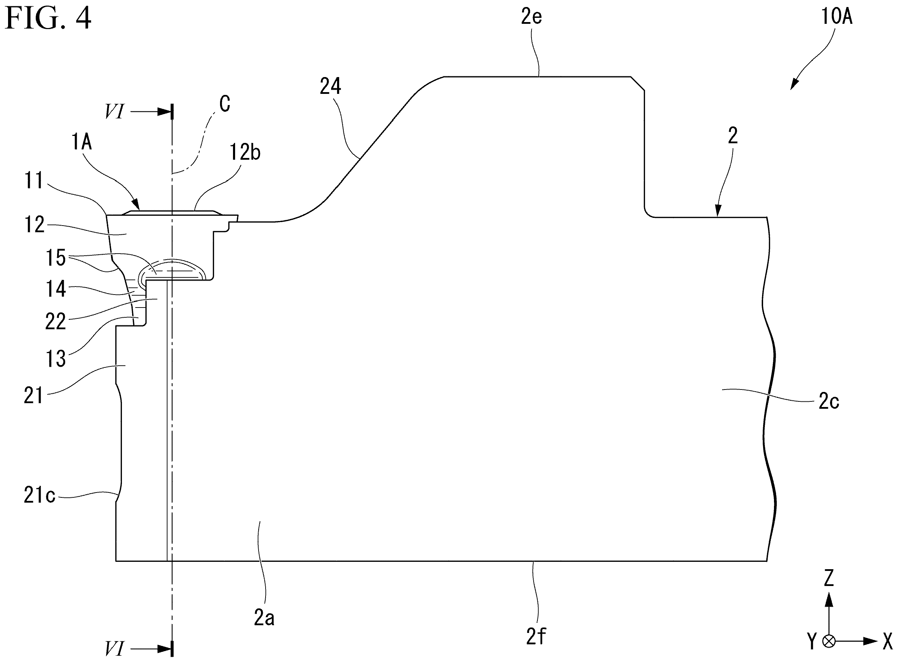

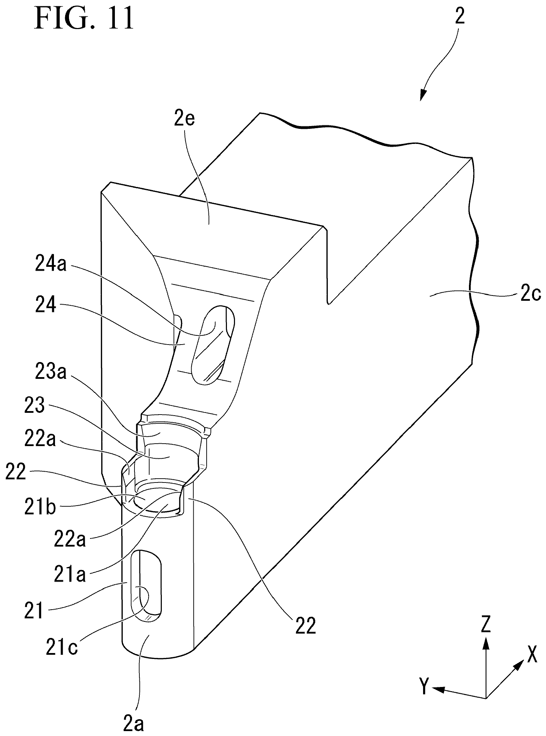

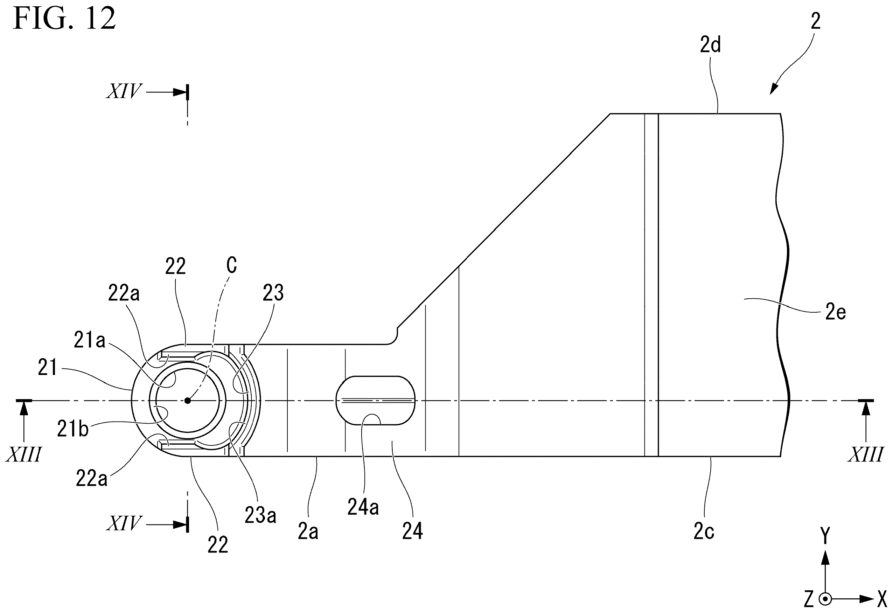

The holder 2 is made of, for example, steel. As shown in FIGS. 11 and 12, the first end portion 2a (that is, the tip portion) of the holder 2 has a smaller dimension in the tool width direction than a portion other than the first end portion 2a. In the present embodiment, as shown in FIGS. 2 and 3, a dimension of the tip portion of the holder 2 in the tool width direction is smaller than the outer diameter dimension of the cutting edge 11 of the cutting insert 1A. Therefore, the cutting edge 11 protrudes to the left side and the right side from the tip portion of the holder 2. A portion of the cutting edge 11 that protrudes in the tool width direction (left-right direction) from the tip portion of the holder 2 may be rephrased as a side cutting edge portion. In addition, as shown in FIG. 4, the cutting edge 11 protrudes from the tip portion of the holder 2 to the tool tip side. A portion of the cutting edge 11 that protrudes from the tip portion of the holder 2 to the tool tip side may be rephrased as a front cutting edge portion. When performing cutting, the front cutting edge portion of the cutting edge 11 is mainly used for machining.

Specifically, as shown in FIG. 3, a portion other than a tool posterior end portion of the cutting edge 11 protrudes outward in the insert radial direction from the tip portion of the holder 2 when viewed from the insert axial direction. In the illustrated example, the cutting edge 11 protrudes outward in the insert radial direction from the tip portion of the holder 2 over a range of approximately 240° with the insert central axis C as a center.

As shown in FIGS. 11 to 14, the cylindrical portion 21 is disposed at an end portion (first end portion 2a) of the holder 2 on the tool tip side. The cylindrical portion 21 is a portion of the holder 2 located closest to the tool tip side. The cylindrical portion 21 has a cylindrical shape extending in the insert axial direction (up-down direction). A central axis of the cylindrical portion 21 is coaxial with the insert central axis C. The cylindrical portion 21 has a hole portion 21a and a through hole 21c.

The hole portion 21a extends inside the cylindrical portion 21 in the insert axial direction. The hole portion 21a is open at least to an upper surface of the cylindrical portion 21. In the present embodiment, the hole portion 21a is a through hole that is open to the upper surface and a lower surface of the cylindrical portion 21. That is, the hole portion 21a penetrates the first end portion 2a of the holder 2 in the insert axial direction. The hole portion 21a has a shaft hole portion 21b. That is, the holder 2 has the shaft hole portion 21b.

The shaft hole portion 21b is disposed at least at an upper end portion of an inner peripheral surface of the hole portion 21a in the insert axial direction. That is, the shaft hole portion 21b constitutes at least a part of an inner peripheral surface of the cylindrical portion 21. The shaft hole portion 21b has a tapered shape that increases in diameter toward an upper side in the insert axial direction. That is, an inner diameter (inner diameter dimension) of the shaft hole portion 21b increases toward the upper side in the insert axial direction. As shown in FIGS. 5 and 6, an inclination angle of an inner peripheral surface of the shaft hole portion 21b with respect to the insert central axis C is substantially the same as the inclination angle Θ2 of the outer peripheral surface of the shaft portion 13 with respect to the insert central axis C in the vertical sectional view along the insert central axis C (see FIG. 9).

As shown in FIGS. 5 and 6, the shaft portion 13 of the cutting insert 1A is fitted into the shaft hole portion 21b. The shaft hole portion 21b holds the shaft portion 13 by fitting. Specifically, the shaft portion 13 is inserted into the shaft hole portion 21b, and an operator presses the pressed surface 12b of the cutting insert 1A downward using the clamping tool 3A described below, thereby causing the shaft portion 13 and the shaft hole portion 21b to be fixed together by fitting. Accordingly, the cutting insert 1A is held by the holder 2.

The through hole 21c penetrates a surrounding wall of the cylindrical portion 21 in the insert radial direction, and communicates with the hole portion 21a. In the present embodiment, the through hole 21c is disposed in a tip side portion of the surrounding wall of the cylindrical portion 21. That is, the through hole 21c is disposed in a portion of the cylindrical portion 21 that is located on the tip side with respect to the insert central axis C, and penetrates the surrounding wall of the cylindrical portion 21 in the tool axial direction.

As shown in FIGS. 1, 2, and 5, the through hole 21c extends in the insert axial direction. The through hole 21c has a dimension in the insert axial direction larger than a dimension in the insert circumferential direction. In the present embodiment, the through hole 21c has an oval shape that is long in the up-down direction. In a state in which the cutting insert 1A is held by the holder 2, the lower surface 13a of the cutting insert 1A is located between an upper end and a lower end of the through hole 21c in the insert axial direction. In the present embodiment, the lower surface 13a of the cutting insert 1A is located slightly below the upper end of the through hole 21c, that is, the lower surface 13a is disposed in an upper portion of the through hole 21c in the insert axial direction.

As shown in FIGS. 11 to 14, the guide wall portion 22 is disposed on the upper side of the cylindrical portion 21 in the insert axial direction. The guide wall portion 22 protrudes upward from a portion, excluding an end portion on the tool tip side, of an upper end portion of the cylindrical portion 21. In the present embodiment, the holder 2 is provided with a pair of the guide wall portions 22, and the pair of guide wall portions 22 protrude upward from a left end portion and a right end portion of the upper end portion of the cylindrical portion 21. As shown in FIG. 12, when viewed from the insert axial direction, the pair of guide wall portions 22 are disposed at a distance from each other in the tool width direction with the shaft hole portion 21b interposed therebetween. Each guide wall portion 22 has a plate shape. A pair of plate surfaces of each guide wall portion 22 face the tool width direction. The guide wall portion 22 extends in the tool axial direction.

As shown in FIGS. 6 and 11, the guide wall portion 22 has a planar guide surface 22a that faces inward in the insert radial direction and faces the alignment surface 15a of the cutting insert 1A. That is, the holder 2 has the guide surface 22a. The guide surface 22a is disposed on one of the pair of plate surfaces of the guide wall portion 22 that faces inward in the insert radial direction. The guide surface 22a is disposed at least at an upper end portion of one plate surface of the guide wall portion 22.

The guide surface 22a is located outward in the insert radial direction toward the upper side in the insert axial direction. That is, the guide surface 22a has an inclined surface shape that is inclined with respect to the insert central axis C. As shown in FIG. 6, an inclination angle of the guide surface 22a with respect to the insert central axis C is substantially the same as the inclination angle Θ4 of the alignment surface 15a with respect to the insert central axis C in the vertical sectional view along the insert central axis C (see FIG. 9). In the present embodiment, the alignment surface 15a and the guide surface 22a face each other with a gap therebetween.

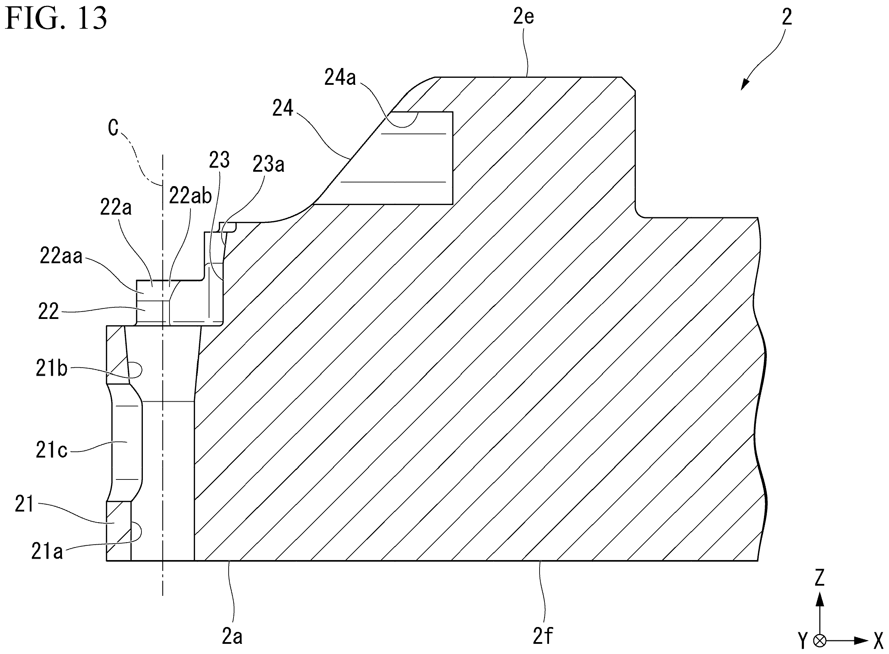

As shown in FIG. 13, the guide surface 22a has a substantially rectangular shape. A dimension of the guide surface 22a in the up-down direction is constant along the tool axial direction. A dimension of the guide surface 22a in the tool axial direction increases toward the upper side. In the present embodiment, a dimension in the tool axial direction of a front portion 22aa of the guide surface 22a that is located on the tool tip side of the insert central axis C is larger than a dimension in the tool axial direction of a posterior portion 22ab of the guide surface 22a that is located on the tool posterior end side of the insert central axis C. In addition, a surface area of the front portion 22aa of the guide surface 22a is larger than a surface area of the posterior portion 22ab of the guide surface 22a.

As shown in FIGS. 11 to 13, the head portion restraining wall portion 23 is disposed on the upper side of the cylindrical portion 21 in the insert axial direction. The head portion restraining wall portion 23 is located on the tool posterior end side with respect to the cylindrical portion 21 and the guide wall portion 22. The head portion restraining wall portion 23 is a wall portion facing the tool tip side. The head portion restraining wall portion 23 has a head portion restraining surface 23a. That is, the holder 2 includes the head portion restraining surface 23a.

The head portion restraining surface 23a is disposed above the cylindrical portion 21 in the insert axial direction, and faces the tool tip side. The head portion restraining surface 23a is located above the guide wall portion 22. The head portion restraining surface 23a is disposed at least at an upper end portion of the head portion restraining wall portion 23. The head portion restraining surface 23a has a recessed curved shape facing inward in the insert radial direction and extending in the insert circumferential direction. A dimension of the head portion restraining surface 23a in the insert circumferential direction is larger than a dimension of the head portion restraining surface 23a in the insert axial direction.

The head portion restraining surface 23a is located outward in the insert radial direction toward the upper side in the insert axial direction. The head portion restraining surface 23a has a tapered shape with the insert central axis C as a center. As shown in FIG. 5, an inclination angle of the head portion restraining surface 23a with respect to the insert central axis C is substantially the same as the inclination angle θ1 of the outer peripheral surface of the head portion 12 with respect to the insert central axis C in the vertical sectional view along the insert central axis C (see FIG. 9).

As shown in FIG. 5, the head portion restraining surface 23a comes into contact with at least a part of the outer peripheral surface of the head portion 12 of the cutting insert 1A. In the present embodiment, the head portion restraining surface 23a comes into contact with a portion of the outer peripheral surface of the head portion 12 facing the tool posterior end side. The head portion restraining surface 23a comes into contact with an intermediate portion of the outer peripheral surface of the head portion 12 that is located between the upper end portion and the lower end portion in the insert axial direction. The head portion 12 of the cutting insert 1A is supported from the tool posterior end side by the holder 2 by the contact between the outer peripheral surface of the head portion 12 and the head portion restraining surface 23a.

As shown in FIGS. 11 to 14, the front wall portion 24 is disposed on the upper side of the cylindrical portion 21, the guide wall portion 22, and the head portion restraining wall portion 23 in the insert axial direction. The front wall portion 24 is located on the tool posterior end side with respect to the cylindrical portion 21, the guide wall portion 22, and the head portion restraining wall portion 23. The front wall portion 24 is a wall portion facing the tool tip side. The front wall portion 24 is located on the tool posterior end side toward the upper side in the insert axial direction. That is, the front wall portion 24 has an inclined surface shape that is inclined with respect to the insert central axis C. In the present embodiment, a dimension in the tool width direction of a portion other than a tool posterior end portion of the front wall portion 24 is smaller than a dimension in the tool width direction of the tool posterior end portion of the front wall portion 24.

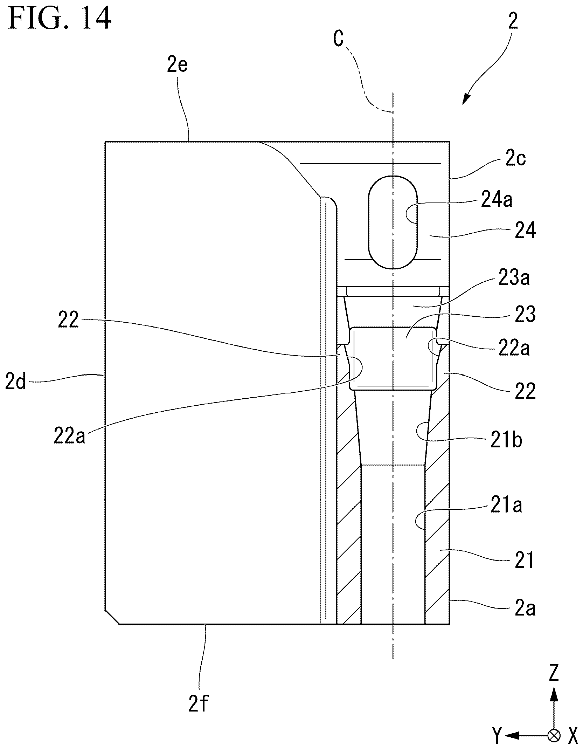

A hole-shaped locked portion 24a extending in the tool axial direction is open to the front wall portion 24. That is, the holder 2 has the locked portion 24a. In the present embodiment, the locked portion 24a corresponds to the first locked portion. A locking portion 34, which will be described below, of the clamping tool 3A is locked to the locked portion 24a. The locked portion 24a is a hole that is recessed from an outer surface of the holder 2 and is capable of receiving the locking portion 34. A direction in which the locking portion 34 is inserted into the locked portion 24a is the same direction as a predetermined direction (X axis direction) in which the upper jaw portion 31 of the clamping tool 3A extends. The locked portion 24a has a dimension in the insert axial direction (Z axis direction) larger than a dimension in a direction (tool width direction, that is, Y axis direction) orthogonal to each of the predetermined direction and the insert axial direction. In the present embodiment, as shown in FIG. 14, when the holder 2 is viewed from the tool tip side, the locked portion 24a has an oval hole shape that is long in the up-down direction.

### [Clamping Tool]

As shown in FIGS. 15 to 18, the clamping tool 3A is configured of the plate-shaped upper jaw portion (first jaw portion) 31, the plate-shaped lower jaw portion (second jaw portion) 32, and the plate-shaped operation lever 33, which are integrally formed. The clamping tool 3A is used when performing clamping to attach the cutting insert 1A to the holder 2 and when performing unclamping to remove the cutting insert 1A from the holder 2.

In each figure, reference numeral D1 represents a first direction D1 in which the operator rotationally moves the operation lever 33 with the locking portion 34 described below as a fulcrum when clamping the cutting insert 1A In addition, reference numeral D2 represents a second direction D2 in which the operator rotationally moves the operation lever 33 around the locking portion 34 as a fulcrum when unclamping the cutting insert 1A. The second direction D2 is a direction different from the first direction D1, and specifically a direction opposite to the first direction D1.

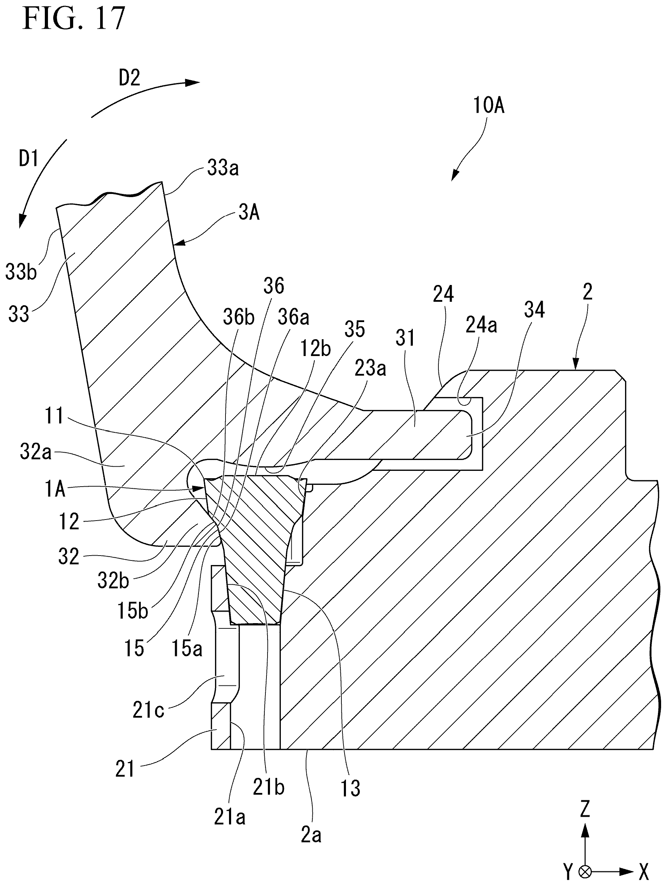

As shown in FIGS. 16 and 17, the upper jaw portion 31 is disposed on the upper side of the head portion 12 of the cutting insert 1A in the insert axial direction, and extends in a predetermined direction (X axis direction). The upper jaw portion 31 protrudes from an end portion (lower end portion in the present embodiment) of the operation lever 33 to the one side in a predetermined direction. As shown in FIGS. 16 to 18, in a side view of the clamping tool 3A as viewed from the plate thickness direction (Y axis direction), the upper jaw portion 31 has a larger width dimension at an end portion on the other side (-X side) in the predetermined direction, that is, at the connection portion with the operation lever 33 than a width dimension (dimension in up-down direction) at an end portion on one side (+X side) in the predetermined direction.

The upper jaw portion 31 is locked to the holder 2 and presses the cutting insert 1A. The upper jaw portion 31 has the locking portion 34 and a first pressing portion 35. That is, the clamping tool 3A includes the locking portion 34 and the first pressing portion 35.

The locking portion 34 is disposed at an end portion of the upper jaw portion 31 on the one side in the predetermined direction. The locking portion 34 extends in the predetermined direction. In the present embodiment, in the side view of the clamping tool 3A in the plate thickness direction, a width dimension (dimension in up-down direction) of the locking portion 34 is constant along the predetermined direction. The locking portion 34 has a dimension in the insert axial direction (up-down direction) larger than a dimension in a direction (that is, plate thickness direction) orthogonal to each of the predetermined direction and the insert axial direction. The locking portion 34 is inserted into the locked portion 24a and is thus locked to the locked portion 24a. That is, the locking portion 34 is locked to the holder 2.

The first pressing portion 35 protrudes downward from a lower surface of the upper jaw portion 31 that faces downward in the insert axial direction. As shown in FIG. 17, in a sectional view perpendicular to the plate thickness direction of the clamping tool 3A, the first pressing portion 35 has a convex curve shape that bulges downward. The first pressing portion 35 is located on the other side in the predetermined direction with respect to the locking portion 34. In the present embodiment, the first pressing portion 35 is disposed at an end portion of the upper jaw portion 31 on the other side in the predetermined direction.

The first pressing portion 35 is located on an upper side of the head portion 12 and can come into contact with the upper surface of the head portion 12. In the present embodiment, the first pressing portion 35 comes into contact with the pressed surface 12b. The operator rotationally moves the operation lever 33 in the first direction D1 using the locking portion 34 as a fulcrum in a case of clamping the cutting insert 1A, the first pressing portion 35 pushes the head portion 12 downward in the insert axial direction to fit the shaft portion 13 into the shaft hole portion 21b of the holder 2. Accordingly, the cutting insert 1A is fixed and clamped to the holder 2.

The lower jaw portion 32 is disposed below the upper jaw portion 31 in the insert axial direction. The lower jaw portion 32 is located on the other side in the predetermined direction with respect to the cutting insert 1A, and protrudes downward from the end portion (lower end portion in the present embodiment) of the operation lever 33. The lower jaw portion 32 has a base part 32a connected to the operation lever 33 and an action part 32b connected to the base part 32a.

The base part 32a protrudes downward from the end portion of the operation lever 33. The base part 32a extends in the up-down direction. The action part 32b protrudes from a part of the base part 32a to the one side in the predetermined direction. In the present embodiment, the action part 32b protrudes from a lower end portion of the base part 32a to the one side in the predetermined direction. In the side view of the clamping tool 3A as viewed from the plate thickness direction, a width dimension (dimension in predetermined direction) of the base part 32a is larger than a width dimension (dimension in up-down direction) of the action part 32b.

The action part 32b has a second pressing portion 36. That is, the lower jaw portion 32 has the second pressing portion 36. That is, the clamping tool 3A includes the second pressing portion 36. The second pressing portion 36 is disposed at an end portion of the action part 32b on the one side in the predetermined direction. The second pressing portion 36 is located at least at an upper end portion of the end portion of the action part 32b on the one side in the predetermined direction. The second pressing portion 36 comes into contact with at least one of the plurality of index portions 15 provided on the cutting insert 1A In the present embodiment, the second pressing portion 36 comes into contact with the index portion 15 facing the tool tip side among the plurality of index portions 15.

The operator rotationally moves the operation lever 33 in the second direction D2 using the locking portion 34 as a fulcrum in a case of unclamping the cutting insert 1A, the second pressing portion 36 pushes a part of the cutting insert 1A upward in the insert axial direction to release the fitting of the shaft portion 13 into the shaft hole portion 21b. Accordingly, the cutting insert 1A is released from the fixed state with the holder 2 and unclamped.

In the present embodiment, the second pressing portion 36 has a first push-up portion 36a facing the one side in the predetermined direction, and a second push-up portion 36b disposed on an upper side of the first push-up portion 36a.

The first push-up portion 36a is a portion of the second pressing portion 36 that faces the alignment surface 15a of the index portion 15. The first push-up portion 36a comes into contact with the alignment surface 15a. The first push-up portion 36a is located on the other side in the predetermined direction toward the upper side in the insert axial direction in the sectional view perpendicular to the plate thickness direction of the clamping tool 3A. That is, the first push-up portion 36a has an inclined surface shape that is inclined with respect to the insert central axis C. In this sectional view, the first push-up portion 36a extends substantially parallel to the alignment surface 15a. In the present embodiment, the first push-up portion 36a linearly extends in this sectional view. That is, the first push-up portion 36a has a planar shape. In this sectional view, an angle at which the first push-up portion 36a is inclined with respect to the alignment surface 15a is, for example, within 5°.

The second push-up portion 36b is a portion of the second pressing portion 36 that faces the upper side surface 15b of the index portion 15. The second push-up portion 36b comes into contact with the upper side surface 15b. The second push-up portion 36b is located on the other side in the predetermined direction toward the upper side in the insert axial direction in the sectional view perpendicular to the plate thickness direction of the clamping tool 3A. That is, the second push-up portion 36b has an inclined surface shape that is inclined with respect to the insert central axis C. In this sectional view, the second push-up portion 36b extends substantially parallel to the upper side surface 15b. In the present embodiment, the second push-up portion 36b linearly extends in this sectional view. That is, the second push-up portion 36b has a planar shape. The second push-up portion 36b faces the one side in the predetermined direction and the upper side in the insert axial direction. In this sectional view, an angle at which the second push-up portion 36b is inclined with respect to the upper side surface 15b is, for example, within 5°.

As shown in FIG. 18, the operation lever 33 has the longest total length among the upper jaw portion 31, the lower jaw portion 32, and the operation lever 33 constituting the clamping tool 3A. In the present embodiment, the operation lever 33 is located on the other side in the predetermined direction toward the upper side from the end portion (lower end portion) connected to the upper jaw portion 31 and the lower jaw portion 32. In the side view of the clamping tool 3A as viewed from the plate thickness direction, a width dimension (dimension in predetermined direction) of the operation lever 33 is larger than the width dimension of each of the upper jaw portion 31 and the lower jaw portion 32. In this side view, the width dimension of the operation lever 33 increases toward the upper side.

In the present embodiment, an angle between the predetermined direction in which the upper jaw portion 31 extends and a direction in which the operation lever 33 extends is 60° or greater and 180° or less, when viewed from the direction (Y axis direction) orthogonal to the predetermined direction (X axis direction) and the insert axial direction (Z axis direction), that is, in the side view of the clamping tool 3A as viewed from the plate thickness direction. Specifically, an angle α formed between a front surface 33a of the operation lever 33 that faces the one side in the predetermined direction and any one of an upper surface and a lower surface of the locking portion 34 of the upper jaw portion 31 is 60° or greater and 180° or less. The angle α is more preferably 90° or greater. In addition, an angle formed between a rear surface 33b of the operation lever 33 that faces the other side in the predetermined direction and any one of the upper surface and the lower surface of the locking portion 34 is 65° or greater and 175° or less.

In the present embodiment, in the side view of the clamping tool 3A as viewed from the plate thickness direction, the front surface 33a extends linearly, and the rear surface 33b extends in a recessed curved shape. However, the present invention is not limited to this, and for example, in this side view, a part of the front surface 33a and a part other than the part may extend in different directions (inclinations). In addition, a part of the rear surface 33b and a part other than the part may extend in different directions from each other.

### [Operational Effects Achieved by Present Embodiment]

In the indexable cutting tool 10A according to the present embodiment described above, when the cutting insert 1A is attached to the holder 2, the cutting insert 1A is held by the holder 2 by fitting the shaft portion 13 into the shaft hole portion 21b. In this case, the planar alignment surface 15a of a predetermined index portion 15 among the plurality of index portions 15 of the cutting insert 1A is guided by the planar guide surface 22a of the holder 2. Accordingly, the cutting insert 1A is accurately aligned and indexed in the insert circumferential direction. In the present embodiment, the predetermined index portion 15 is the pair of index portions 15 facing both sides in the tool width direction, that is, the left side and the right side.

In the present embodiment, the cutting insert 1A is fixed to the holder 2 by fitting the shaft portion 13 of the cutting insert 1A into the shaft hole portion 21b of the holder 2. A screw member or the like for clamping the cutting insert 1A is unnecessary, and complication of structures of the cutting insert 1A and the holder 2 can be suppressed. Then, the clamping work and the unclamping work of the cutting insert 1A with respect to the holder 2 can be performed using one (common) clamping tool 3A. Therefore, it is easy to manage the clamping tool 3A.

Specifically, when performing clamping to attach the cutting insert 1A to the holder 2, the operation lever 33 is rotationally moved in the first direction D1 in a state in which the locking portion 34 is locked to the holder 2. Accordingly, according to the principle of the lever (function of lever) in which the locking portion 34 is used as a fulcrum, the first pressing portion 35 of the clamping tool 3A presses the head portion 12 of the cutting insert 1A downward, and the shaft portion 13 of the cutting insert 1A is stably fitted into the shaft hole portion 21b of the holder 2. That is, when performing clamping, the locking portion 34 functions as a fulcrum, the operation lever 33 functions as a force point, and the first pressing portion 35 functions as a point of application.

Compared with the configuration in the related art in which the cutting insert is clamped by hitting with a hammer or the like, according to the present embodiment, damage or the like of the cutting insert 1A can be suppressed, and the fitted state (fixed state) of the shaft portion 13 into the shaft hole portion 21b can be more stabilized.

In addition, when performing unclamping to remove the cutting insert 1A from the holder 2, the operation lever 33 is rotationally moved in the second direction D2 in a state in which the locking portion 34 is locked to the holder 2. Accordingly, according to the principle of the lever in which the locking portion 34 is used as a fulcrum, the second pressing portion 36 of the clamping tool 3A presses a part (contact portion 15) of the cutting insert 1A upward, and the fitting of the shaft portion 13 of the cutting insert 1A into the shaft hole portion 21b of the holder 2 is stably released. That is, when performing unclamping, the locking portion 34 functions as a fulcrum, the operation lever 33 functions as a force point, and the second pressing portion 36 functions as a point of application.

Compared with the configuration in the related art in which the cutting insert is unclamped by pushing up the lower surface of the cutting insert with a thin rod or the like, according to the present embodiment, jumping-out, dropping, loss, and the like of the cutting insert 1A can be suppressed.

From the above, according to the present embodiment, it is possible to stably clamp and unclamp the cutting insert 1A to and from the holder 2 while suppressing the complication of the structures of the cutting insert 1A and the holder 2.

In addition, in the present embodiment, the second pressing portion 36 comes into contact with at least one of the plurality of index portions 15. That is, at least one of the plurality of index portions 15 is the contact portion 15.

In this case, when the cutting insert 1A is unclamped, the second pressing portion 36 pushes up at least one (contact portion 15) of the plurality of index portions 15, whereby the fitting of the shaft portion 13 of the cutting insert 1A into the shaft hole portion 21b of the holder 2 is released. That is, the index portion 15 of the cutting insert 1A can be used when performing indexing and when performing unclamping, and the structure is further simplified.

In addition, in the present embodiment, the index portion 15 has the surfaces 15a and 15b located outward in the insert radial direction toward the upper side in the insert axial direction.

In this case, the second pressing portion 36 of the clamping tool 3A is brought into contact with the surfaces 15a and 15b of the index portion 15, whereby the cutting insert 1A can be stably pushed up by the second pressing portion 36. The cutting insert 1A can be unclamped more stably. The second pressing portion 36 need only come into contact with at least one of the surfaces 15a and 15b.

The number of the index portions 15 of the cutting insert 1A is a multiple of 4, and is four in the present embodiment.

In the present embodiment, the pair of index portions 15 facing opposite sides of each other in the insert radial direction are guided by a pair of the guide surfaces 22a of the holder 2, so that the cutting insert 1A is indexed to the holder 2. In a case where the number of the index portions 15 is a multiple of 4 as in the above configuration, another index portion 15 located between the pair of index portions 15 in the insert circumferential direction can be used as the contact portion 15 with which the clamping tool 3A comes into contact. Specifically, in the present embodiment, since the pair of index portions 15 face a tool width direction, the other index portion (contact portion) 15 faces the tool tip side (tool front surface), which makes it easy to make contact with the second pressing portion 36 of the clamping tool 3A. That is, the unclamping work of the cutting insert 1A is facilitated.

In addition, in the present embodiment, the first pressing portion 35 comes into contact with the pressed surface 12b.

In this case, when the cutting insert 1A is clamped, the first pressing portion 35 comes into contact with the pressed surface 12b above the cutting edge 11. Therefore, contact between the first pressing portion 35 and the cutting edge 11 is suppressed. Therefore, unintentional chipping of an edge tip when performing clamping can be suppressed.

In addition, in the present embodiment, the first pressing portion 35 protrudes downward from the lower surface of the upper jaw portion 31 that faces downward in the insert axial direction.

In this case, when the cutting insert 1A is clamped, the first pressing portion 35 can be stably brought into contact with a predetermined position (pressed surface 12b) of the head portion 12 of the cutting insert 1A. Therefore, the cutting insert 1A is stably clamped. In addition, the contact between the first pressing portion 35 and the cutting edge 11 can be suppressed.

In addition, in the present embodiment, in the sectional view perpendicular to the plate thickness direction of the clamping tool 3A, the first pressing portion 35 has a convex curve shape that bulges downward.

In this case, when the cutting insert 1A is clamped, the contact state between the first pressing portion 35 and the upper surface of the head portion 12 is satisfactorily maintained in a process that the clamping tool 3A is rotationally moved in the first direction D1 using the locking portion 34 as a fulcrum.

In addition, in the present embodiment, the locking portion 34 has a dimension in the insert axial direction larger than a dimension in a direction (that is, plate thickness direction) orthogonal to each of the predetermined direction and the insert axial direction.

In this case, it is possible to secure a large geometrical moment of inertia of the locking portion 34 when performing clamping and unclamping while simplifying the structure of the locking portion 34. Therefore, each function of clamping and unclamping by the clamping tool 3A is stabilized.

In addition, in the present embodiment, when the clamping tool 3A is viewed from the plate thickness direction, the angle between the predetermined direction in which the upper jaw portion 31 extends and the direction in which the operation lever 33 extends is 60° or greater and 180° or less.

In a case where the above angle is 60° or greater, when the operation lever 33 is rotationally moved in the first direction D1 in performing clamping, a force for pulling the upper jaw portion 31 upward is less likely to be generated. Therefore, a force for pressing the head portion 12 of the cutting insert 1A downward by the first pressing portion 35 is stabilized. In addition, in a case where the operation lever 33 is rotationally moved in the second direction D2 when performing unclamping, a force for pushing the lower jaw portion 32 downward is less likely to be generated. Therefore, a force for pressing a part of the cutting insert 1A upward by the second pressing portion 36 is stabilized. The above angle is more preferably 90° or greater.

In addition, in a case where the angle is 180° or less, when the operation lever 33 is rotationally moved in the first direction D1 in performing clamping, the operation lever 33 can be operated in a direction of being separated from the cutting insert 1A to the other side (-X side) in the predetermined direction (can be operated by the operator with a pulling force). For example, safety is improved compared to a case where the operation lever 33 is operated in a direction to approach the cutting insert 1A (operated by the operator with a pushing force) when performing clamping unlike the above configuration. In addition, in a case where the operation lever 33 is rotationally moved in the second direction D2 when performing unclamping, a force in a direction of separating the lower jaw portion 32 from the cutting insert 1A to the other side in the predetermined direction is less likely to be generated. Therefore, the cutting insert 1A can be stably unclamped by the second pressing portion 36.

In addition, in the present embodiment, the locked portion (first locked portion) 24a of the holder 2 is a hole that can receive the locking portion 34.

In this case, the locking portion 34 of the clamping tool 3A is locked to the holder 2 by being inserted into the hole-shaped locked portion 24a. The locked portion 24a is merely a hole, which simplifies the structure of the holder 2.

In addition, in the present embodiment, the locked portion 24a has a dimension in the insert axial direction larger than a dimension in a direction (that is, left-right direction) orthogonal to each of the predetermined direction in which the locking portion 34 is inserted into the locked portion 24a and the insert axial direction.

In this case, since a hole shape (opening shape) of the locked portion 24a is a vertically elongated shape that is long in an up-down direction, the locking portion 34 to be inserted into the locked portion 24a can also have the vertically elongated shape. Accordingly, it is possible to secure a large geometrical moment of inertia of the locking portion 34 when performing clamping and unclamping, and each function of clamping and unclamping by the clamping tool 3A is stabilized.

In addition, in the present embodiment, the distance between the pressed surface 12b of the head portion 12 and the cutting edge 11 in the insert axial direction is 0.05 mm or greater and 1.0 mm or less.

In a case where the above distance is 0.05 mm or greater, the contact between the first pressing portion 35 and the cutting edge 11 is stably suppressed, for example, even in a case where the cutting insert 1A is sintered and deformed during manufacturing, resulting in variations in individual dimensions.

In addition, in a case where the distance is 1.0 mm or less, a step that affects a chip flow is less likely to be formed between the cutting edge 11 and the pressed surface 12b, thereby stabilizing a chip discharge performance during cutting.

### <Second Embodiment>

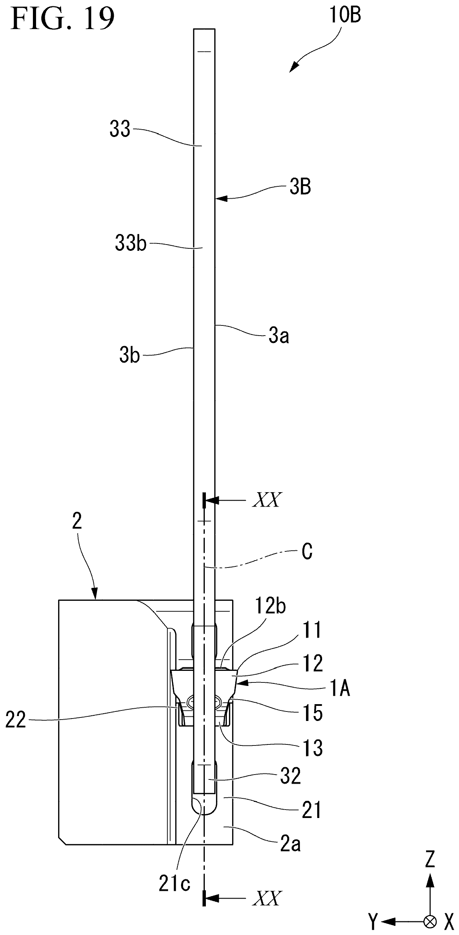

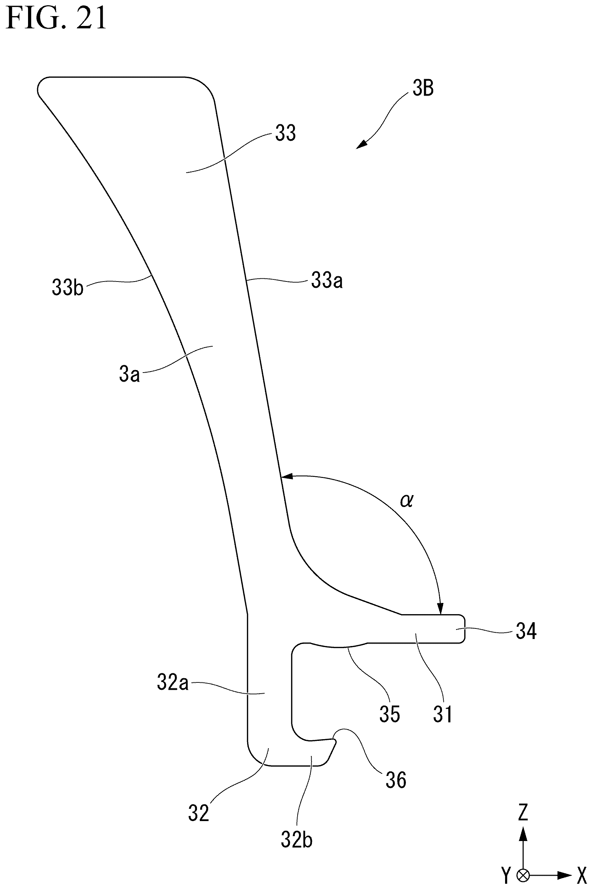

Next, a clamping tool 3B, an indexable cutting tool with a clamping tool 10B (hereinafter, may be simply referred to as an indexable cutting tool 10B), and the cutting insert 1A according to a second embodiment of the present invention will be described with reference to FIGS. 19 to 21. In the present embodiment, the same names and reference numerals will be assigned to the same configurations as those in the above-described embodiment, and description thereof may be omitted.

As shown in FIGS. 19 to 21, the indexable cutting tool 10B according to the present embodiment is different from the indexable cutting tool 10A described in the above-described embodiment in the configurations of the clamping tool 3B and a part of the cutting insert 1A. Specifically, the clamping tool 3B according to the present embodiment is different from the clamping tool 3A described in the above-described embodiment in the configuration of the lower jaw portion 32.

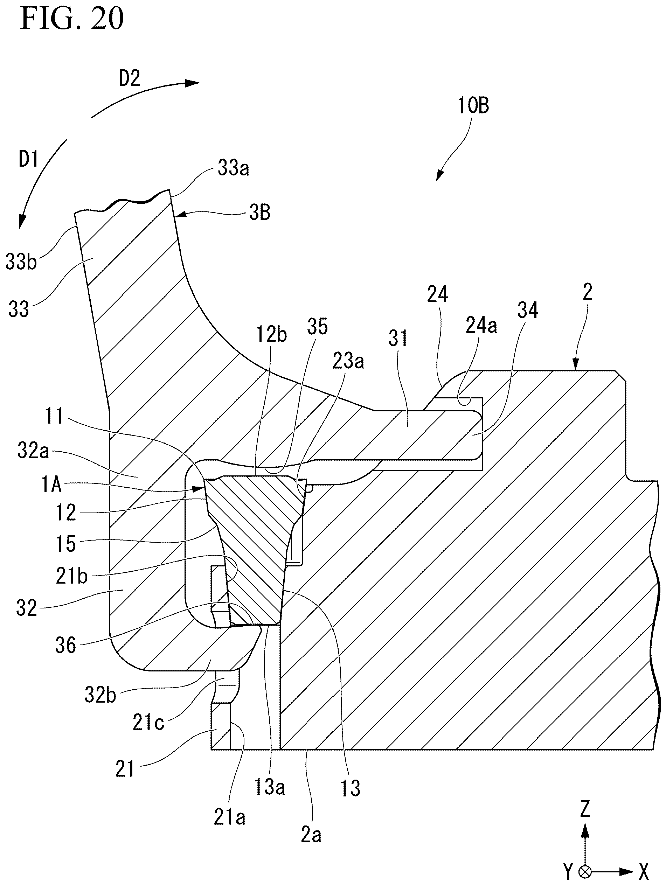

As shown in FIG. 20, in the present embodiment, the action part 32b of the lower jaw portion 32 is inserted into the through hole 21c of the holder 2. The end portion of the action part 32b on the one side in the predetermined direction is disposed in the hole portion 21a. The second pressing portion 36 is disposed on an upper surface of the end portion of the action part 32b on the one side in the predetermined direction. The second pressing portion 36 is located above a portion, excluding the second pressing portion 36, of the upper surface of the action part 32b. That is, the second pressing portion 36 is disposed on the uppermost side of the upper surface of the action part 32b.

Then, the second pressing portion 36 comes into contact with the lower surface 13a of the shaft portion 13. In the present embodiment, the second pressing portion 36 comes into contact with a central portion of the lower surface 13a of the shaft portion 13. That is, in the present embodiment, the second pressing portion 36 can come into contact with the lower surface 13a of the shaft portion 13 by inserting at least a part of the lower jaw portion 32 into the inside of the hole portion 21a through the through hole 21c.

In the present embodiment, the lower surface 13a of the shaft portion 13 of the cutting insert 1A functions as a contact portion 13a. That is, the cutting insert 1A includes the contact portion 13a. The contact portion 13a is a portion that is pushed up by the clamping tool 3B from the lower side in the insert axial direction when the cutting insert 1A is unclamped.

### [Operational Effects Achieved by Present Embodiment]

According to the present embodiment described above, the same effects as those of the above-described embodiment can be obtained.

In addition, in the present embodiment, the second pressing portion 36 comes into contact with the lower surface (contact portion) 13a of the shaft portion 13. Therefore, for example, the lower surface 13a can be stably pushed up by the second pressing portion 36 regardless of the position in the insert circumferential direction of the cutting insert 1A attached to the holder 2 or the disposition of the index portion 15. When the cutting insert 1A is unclamped, the second pressing portion 36 pushes up the lower surface 13a of the shaft portion 13, whereby the fitting of the shaft portion of the shaft portion 13 into the shaft hole portion 21b is stably released.

In addition, in the present embodiment, at least a part of the lower jaw portion 32 is inserted into the inside of the hole portion 21a through the through hole 21c, so that the second pressing portion 36 can come into contact with the lower surface 13a of the shaft portion 13.

In this case, the second pressing portion 36 can be brought into contact with the lower surface 13a of the shaft portion 13 while the total length of the lower jaw portion 32 is suppressed to be small to have a compact structure.

The through hole 21c has the dimension in the insert axial direction larger than the dimension in the insert circumferential direction as described in the above-described embodiment.

In this case, when the operation lever 33 is rotationally moved, a large distance is secured for allowing the action part 32b of the lower jaw portion 32 to move up and down in the through hole 21c. Therefore, the unclamping work of the cutting insert 1A is stably performed.

### <Third Embodiment>

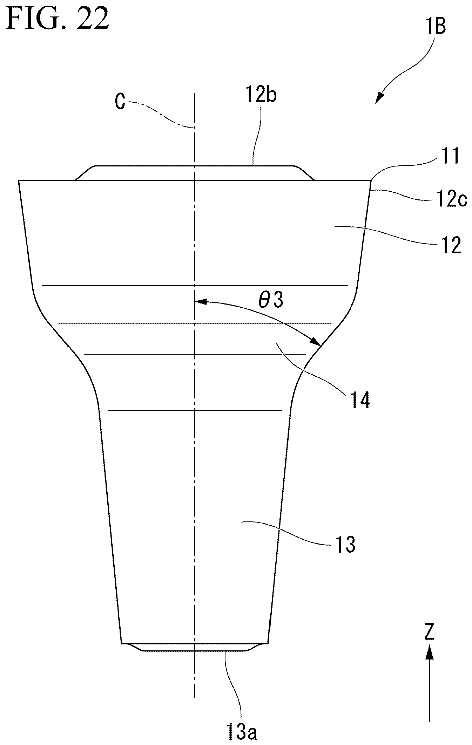

Next, a clamping tool 3C, an indexable cutting tool with a clamping tool 10C (hereinafter, may be simply referred to as an indexable cutting tool 10C), and a cutting insert 1B according to a third embodiment of the present invention will be described with reference to FIGS. 22 to 24. In the present embodiment, the same names and reference numerals will be assigned to the same configurations as those in the above-described embodiment, and description thereof may be omitted.

In the indexable cutting tool 10C according to the present embodiment, as shown in FIG. 22, the cutting insert 1B does not have the index portion 15. The step portion 14 is disposed over the entire circumference in the insert circumferential direction without being divided by the index portion 15. In the side view as viewed from the insert radial direction, the inclination angle Θ3 of the outer peripheral surface of the step portion 14 with respect to the insert central axis C is 15° or greater and 60° or less.

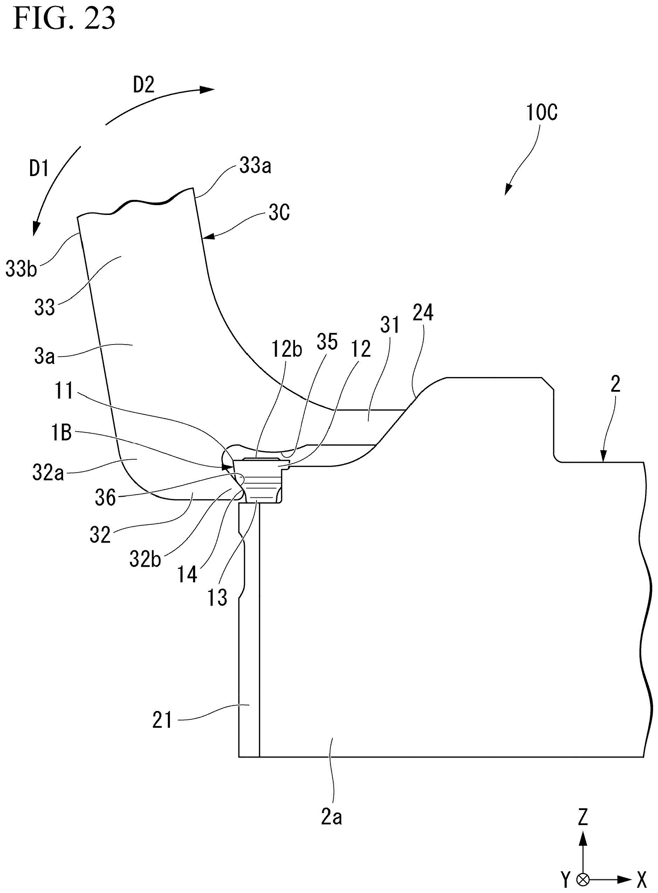

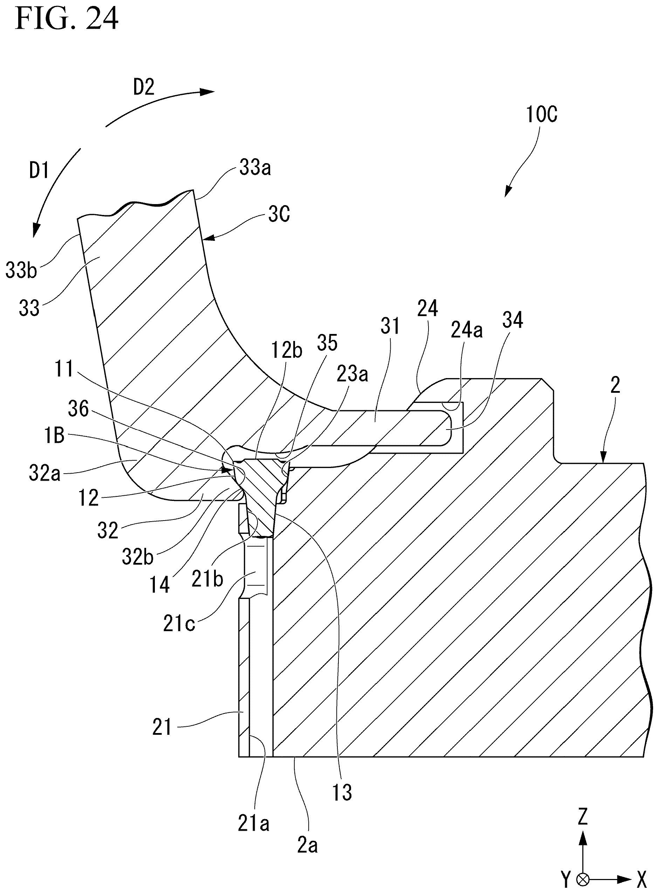

Then, as shown in FIGS. 23 and 24, in the present embodiment, the second pressing portion 36 of the clamping tool 3C comes into contact with the step portion 14. The second pressing portion 36 has an inclined surface shape that is located on the other side (-X side) in the predetermined direction toward the upper side in the insert axial direction. The second pressing portion 36 extends substantially parallel to the step portion 14 in a sectional view perpendicular to the plate thickness direction of the clamping tool 3C.

In the present embodiment, the step portion 14 of the cutting insert 1B functions as a contact portion 14. That is, the cutting insert 1B includes the contact portion 14. The contact portion 14 is a portion that is pushed up by the clamping tool 3C from the lower side in the insert axial direction when the cutting insert 1B is unclamped.

### [Operational Effects Achieved by Present Embodiment]

According to the present embodiment described above, the same effects as those of the above-described embodiment can be obtained.

In addition, in the present embodiment, since the second pressing portion 36 comes into contact with the step portion (contact portion) 14, the step portion 14 can be stably pushed up by the second pressing portion 36 regardless of, for example, the position in the insert circumferential direction of the cutting insert 1B attached to the holder 2. When the cutting insert 1B is unclamped, the second pressing portion 36 pushes up the step portion 14, whereby the fitting of the shaft portion 13 of the cutting insert 1B into the shaft hole portion 21b of the holder 2 is stably released.

In addition, in the present embodiment, in the side view as viewed from the insert radial direction, the inclination angle Θ3 of the outer peripheral surface of the step portion 14 with respect to the insert central axis C is 15° or greater and 60° or less.

In a case where the inclination angle Θ3 is 15° or greater, the step portion 14 can be stably pushed up by the second pressing portion 36 when the cutting insert 1B is unclamped.

In addition, in a case where the inclination angle Θ3 is 60° or less, a large length of the step portion 14 is secured in the side view as viewed from the insert radial direction. Therefore, a large contact area between the step portion 14 and the second pressing portion 36 can be secured, and the unclamping work can be stably performed. In addition, a large wedge angle is secured for the portion (action part 32b) in the lower jaw portion 32 where the second pressing portion 36 is disposed, and the strength of the lower jaw portion 32 is secured.

### <Fourth Embodiment>

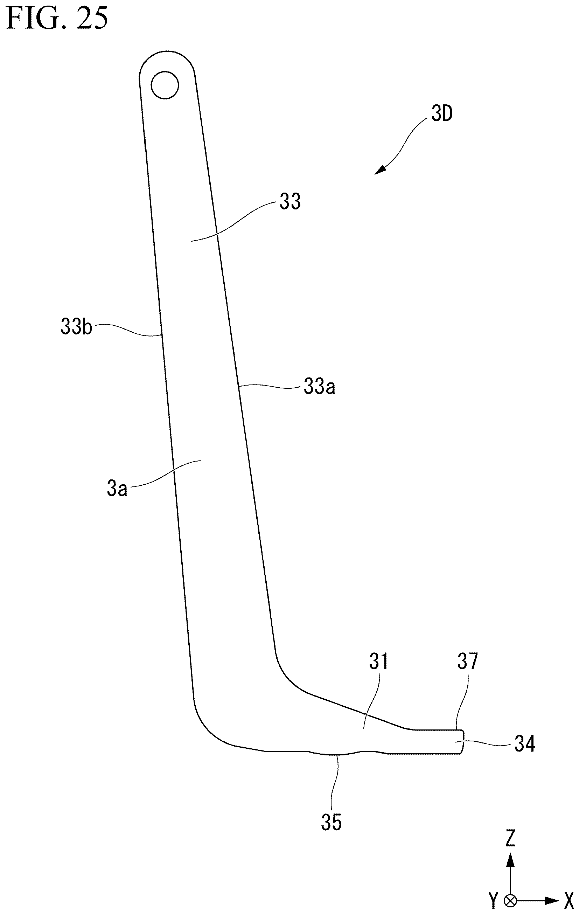

Next, a clamping tool 3D and an indexable cutting tool with a clamping tool 10D (hereinafter, may be simply referred to as an indexable cutting tool 10D) according to a fourth embodiment of the present invention will be described with reference to FIGS. 25 to 29. In the present embodiment, the same names and reference numerals will be assigned to the same configurations as those in the above-described embodiment, and description thereof may be omitted.

The indexable cutting tool 10D includes the cutting insert 1A, the holder 2, and the clamping tool 3D. As shown in FIG. 25, in the indexable cutting tool 10D according to the present embodiment, a configuration of the clamping tool 3D is different from that of the above-described embodiment. The clamping tool 3D includes the upper jaw portion (first jaw portion) 31 and the operation lever 33, and does not include the lower jaw portion 32.

In the present embodiment, the upper jaw portion 31 has a second pressing portion 37. The second pressing portion 37 is disposed on an upper surface of the end portion of the upper jaw portion 31 on the one side (+X side) in the predetermined direction. In the present embodiment, the second pressing portion 37 extends along the predetermined direction (X axis direction). The second pressing portion 37 may extend slightly upward in the insert axial direction toward the one side in the predetermined direction.

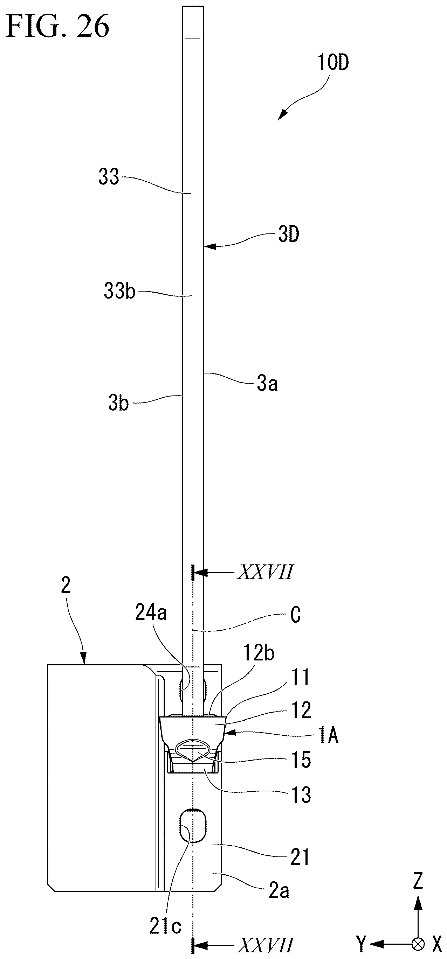

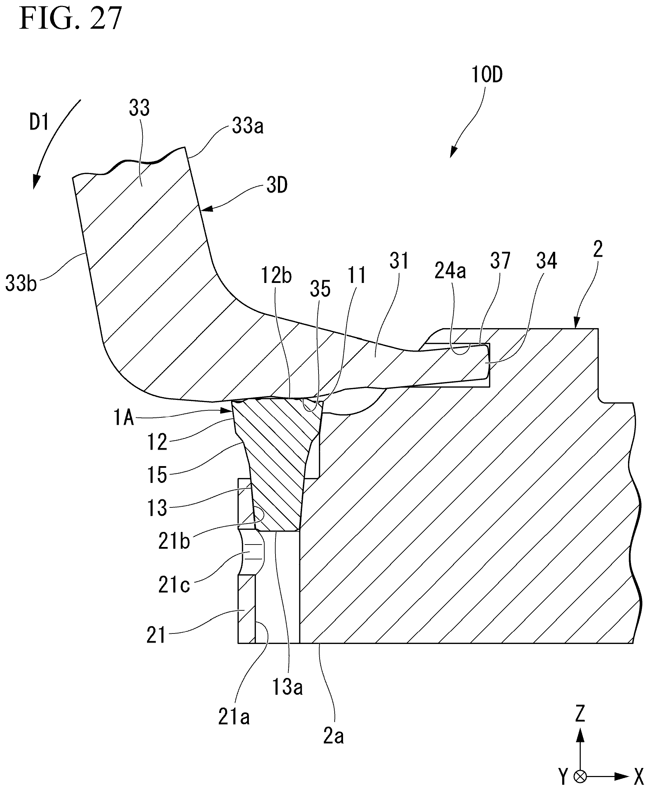

FIGS. 26 and 27 show a usage method of the clamping tool 3D when the cutting insert 1A is clamped. As shown in FIGS. 26 and 27, when performing insert clamping, a tip portion of the upper jaw portion 31 is inserted into the locked portion 24a, and the locking portion 34 is locked to the locked portion 24a.

From this state, the operator rotationally moves the operation lever 33 in the first direction D1 using the locking portion 34 as a fulcrum. Then, the first pressing portion 35 of the upper jaw portion 31 presses the pressed surface 12b of the cutting insert 1A downward in the insert axial direction, and the shaft portion 13 of the cutting insert 1A is fitted into the shaft hole portion 21b of the holder 2. Accordingly, the cutting insert 1A is fixed and clamped to the holder 2.

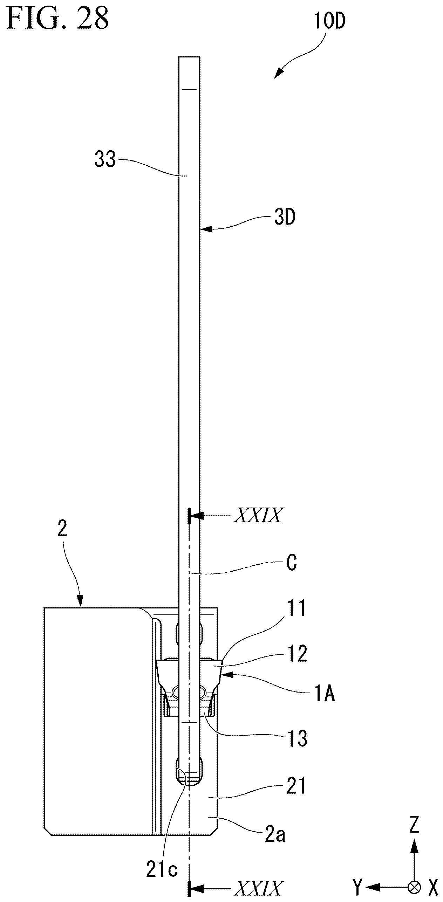

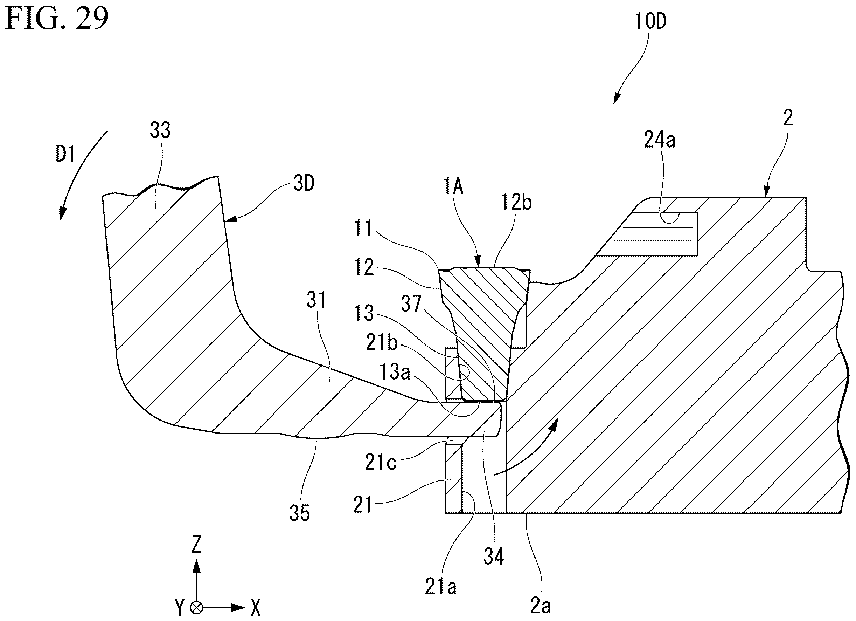

FIGS. 28 and 29 show a usage method of the clamping tool 3D when the cutting insert 1A is unclamped. As shown in FIGS. 28 and 29, when performing insert unclamping, the tip portion of the upper jaw portion 31 is inserted into the through hole 21c, and the locking portion 34 is locked to the through hole 21c. That is, in the present embodiment, a portion where the locking portion 34 is locked to the holder 2 is different between when the cutting insert 1A is clamped and when the cutting insert 1A is unclamped. Specifically, in the present embodiment, the locked portion 24a to which the locking portion 34 is locked when performing clamping corresponds to the first locked portion, and the through hole 21c to which the locking portion 34 is locked when performing unclamping corresponds to the second locked portion.

As shown in FIG. 29, the second pressing portion 37 can come into contact with the lower surface 13a of the shaft portion 13 by inserting the locking portion 34 into the through hole (second locked portion) 21c. From this state, the operator rotationally moves the operation lever 33 in the first direction D1 using the locking portion 34 (locking part of the locking portion 34 with the through hole 21c) as a fulcrum. At this time, the second pressing portion 37 pushes the lower surface 13a of the shaft portion 13 upward in the insert axial direction, and the fitting of the shaft portion 13 into the shaft hole portion 21b is released. That is, in the present embodiment, the lower surface 13a of the shaft portion 13 of the cutting insert 1A functions as the contact portion 13a.

### [Operational Effects Achieved by Present Embodiment]

According to the present embodiment described above, the same effects as those of the above-described embodiment can be obtained.

In addition, in the present embodiment, when performing unclamping to remove the cutting insert 1A from the holder 2, the operation lever 33 is rotationally moved in the first direction D1 in a state in which the locking portion 34 is locked to the holder 2. Accordingly, according to the principle of the lever in which the locking portion 34 is used as a fulcrum, the second pressing portion 37 of the clamping tool 3D presses the lower surface (contact portion) 13a of the shaft portion 13 of the cutting insert 1A upward, and the fitting of the shaft portion 13 of the cutting insert 1A into the shaft hole portion 21b of the holder 2 is stably released. That is, when performing unclamping, the locking portion 34 functions as a fulcrum, the operation lever 33 functions as a force point, and the second pressing portion 37 functions as a point of application.

Compared with the configuration in the related art in which the cutting insert is unclamped by pushing up the lower surface of the cutting insert with a thin rod or the like, according to the present embodiment, jumping-out, dropping, loss, and the like of the cutting insert 1A can be suppressed.

In addition, the clamping work and the unclamping work of the cutting insert 1A can be performed by one (common) clamping tool 3D. Therefore, it is easy to manage the clamping tool 3D.

In addition, in the present embodiment, since the clamping tool 3D does not have the lower jaw portion 32, the structure of the clamping tool 3D is further simplified.

In addition, the direction (first direction D1) in which the operator rotates the operation lever 33 is the same when performing clamping and unclamping, so that operability is good.

### <Fifth Embodiment>

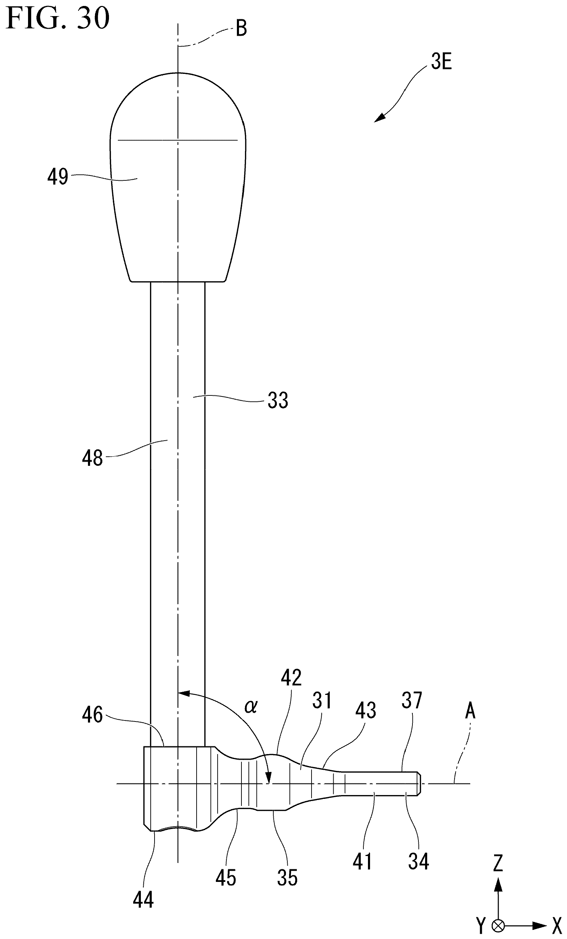

Next, a clamping tool 3E and an indexable cutting tool with a clamping tool 10E (hereinafter, may be simply referred to as an indexable cutting tool 10E) according to a fifth embodiment of the present invention will be described with reference to FIGS. 30 to 35. In the present embodiment, the same names and reference numerals will be assigned to the same configurations as those in the above-described embodiment, and description thereof may be omitted.

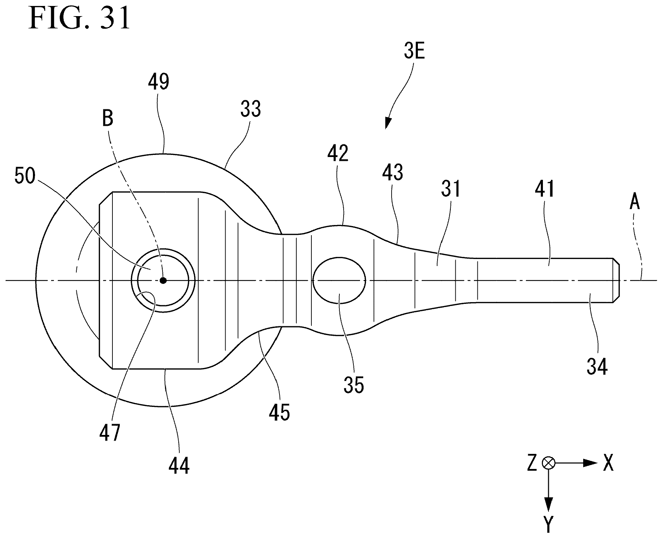

The indexable cutting tool 10E includes the cutting insert 1A, the holder 2, and the clamping tool 3E. As shown in FIGS. 30 and 31, in the indexable cutting tool 10E according to the present embodiment, a configuration of the clamping tool 3E is different from that of the above-described embodiment. The clamping tool 3E includes the upper jaw portion (first jaw portion) 31 and the operation lever 33, and does not include the lower jaw portion 32. In addition, the upper jaw portion 31 and the operation lever 33 are detachably connected to each other.

The upper jaw portion 31 of the clamping tool 3E has a substantially multi-stage columnar shape with a central axis A extending along the predetermined direction (X axis direction) as a center. An outer shape of the upper jaw portion 31 is formed by, for example, turning. The upper jaw portion 31 is extended in the predetermined direction. In the following description, the central axis A of the upper jaw portion 31 will be referred to as a jaw portion axis A. A central axis B of the operation lever 33 is referred to as a lever axis B.

In the present embodiment, when viewed from the left-right direction (Y axis direction), an angle α formed between the jaw portion axis A and the lever axis B is 60° or greater and 180° or less. Specifically, when viewed from the direction (Y axis direction) orthogonal to the predetermined direction and the insert axial direction, the angle α between the predetermined direction in which the upper jaw portion 31 extends and the direction in which the operation lever 33 extends is 60° or greater and 180° or less. The angle α is more preferably 120° or less. In the illustrated example, the angle α is 90°, and the lever axis B extends along the insert axial direction (Z axis direction).

The upper jaw portion 31 has the locking portion 34, the first pressing portion 35, and the second pressing portion 37. The upper jaw portion 31 further has a small-diameter part 41, a first large-diameter part 42, a tapered part 43, a second large-diameter part 44, a neck part 45, an attachment surface 46, and a female screw hole 47.

The small-diameter part 41 has a columnar shape with the jaw portion axis A as a center and extends in the predetermined direction. The small-diameter part 41 is disposed at the end portion (the tip portion of the upper jaw portion 31) of the upper jaw portion 31 on the one side (+X side) in the predetermined direction. The small-diameter part 41 is formed to have the smallest diameter in the upper jaw portion 31.

In the present embodiment, the locking portion 34 and the second pressing portion 37 are located at the small-diameter part 41. The second pressing portion 37 has a protruded curved shape with the jaw portion axis A as a center, and specifically, has a cylindrical surface shape that bulges upward (+Z side) in the insert axial direction.

The first large-diameter part 42 has a substantially columnar shape with the jaw portion axis A as a center, and specifically, has a barrel shape or a spherical shape. The first large-diameter part 42 is disposed on the other side (-X side) in the predetermined direction with respect to the small-diameter part 41. An outer diameter dimension of the first large-diameter part 42, that is, an outer diameter dimension in the radial direction orthogonal to the jaw portion axis A is larger than an outer diameter dimension of the small-diameter part 41.

In the present embodiment, the first pressing portion 35 is located at the first large-diameter part 42. The first pressing portion 35 is disposed at an end portion of the first large-diameter part 42 that is on the lower side (-Z side) in the insert axial direction, and is formed of a surface facing downward in the insert axial direction. In the present embodiment, the first pressing portion 35 has a planar shape extending in a direction perpendicular to the insert central axis C, and specifically, is a circular or elliptical flat surface.

The tapered part 43 has a truncated conical shape with the jaw portion axis A as a center. The tapered part 43 is disposed between the small-diameter part 41 and the first large-diameter part 42 in the predetermined direction. A diameter of the tapered part 43 decreases toward the one side in the predetermined direction. An end portion of the tapered part 43 on the one side in the predetermined direction is smoothly connected to an end portion of the small-diameter part 41 on the other side in the predetermined direction. An end portion of the tapered part 43 on the other side in the predetermined direction is smoothly connected to an end portion of the first large-diameter part 42 on the one side in the predetermined direction.

By providing the tapered part 43, a portion of the upper jaw portion 31 adjacent to the one side in the predetermined direction of the first large-diameter part 42 is formed to have a smaller diameter than the first large-diameter part 42. In other words, a portion of the lower surface of the upper jaw portion 31 adjacent to the one side in the predetermined direction of the first pressing portion 35 (first large-diameter part 42) is located above the first pressing portion 35.

The second large-diameter part 44 has a columnar shape with the jaw portion axis A as a center. The second large-diameter part 44 is disposed at an end portion of the upper jaw portion 31 on the other side in the predetermined direction. In the present embodiment, the second large-diameter part 44 is formed to have the largest diameter in the upper jaw portion 31. The present invention is not limited to this, for example, the first large-diameter part 42 may be formed to have the largest diameter in the upper jaw portion 31.

The neck part 45 is disposed between the first large-diameter part 42 and the second large-diameter part 44 in the predetermined direction. An end portion of the neck part 45 on the one side in the predetermined direction is smoothly connected to an end portion of the first large-diameter part 42 on the other side in the predetermined direction. An end portion of the neck part 45 on the other side in the predetermined direction is smoothly connected to an end portion of the second large-diameter part 44 on the one side in the predetermined direction. A diameter of a portion of the neck part 45 on the one side in the predetermined direction decreases from the connection portion with the first large-diameter part 42 toward the other side in the predetermined direction. A diameter of a portion of the neck part 45 on the other side in the predetermined direction decreases from the connection portion with the second large-diameter part 44 toward the one side in the predetermined direction.

By providing the neck part 45, a portion of the upper jaw portion 31 adjacent to the other side in the predetermined direction of the first large-diameter part 42 is formed to have a smaller diameter than the first large-diameter part 42. In other words, a portion of the lower surface of the upper jaw portion 31 adjacent to the other side in the predetermined direction of the first pressing portion 35 (first large-diameter part 42) is located above the first pressing portion 35.

The attachment surface 46 is disposed at an end portion of the second large-diameter part 44 that is on the upper side (+Z side) in the insert axial direction, and is formed of a surface facing upward in the insert axial direction. In the present embodiment, the attachment surface 46 has a planar shape extending in a direction perpendicular to the lever axis B.

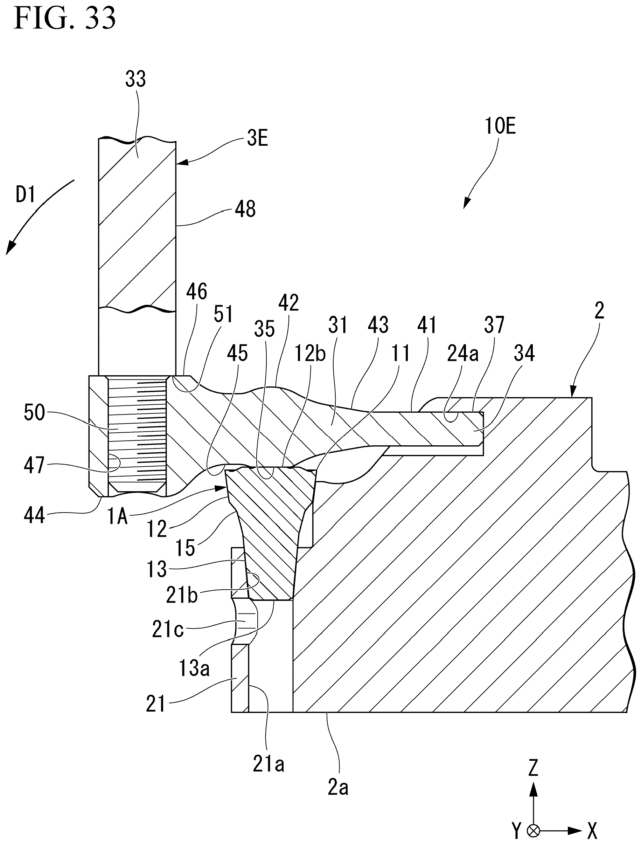

As shown in FIG. 33, the female screw hole 47 is disposed at the end portion of the upper jaw portion 31 (posterior end portion of the upper jaw portion 31) on the other side in the predetermined direction, and specifically, is disposed at the second large-diameter part 44. The female screw hole 47 extends along a direction in which the lever axis B extends (up-down direction in the present embodiment) and penetrates the upper jaw portion 31. An upper end portion of the female screw hole 47 is open to the attachment surface 46. A lower end portion of the female screw hole 47 is open to a lower surface of the second large-diameter part 44. The female screw hole 47 may be a bottomed blind hole that is open only to the upper side (attachment surface 46).

As shown in FIGS. 30 and 33, the operation lever 33 is fixed to the posterior end portion of the upper jaw portion 31. A dimension (total length) of the operation lever 33 along the lever axis B is larger than a dimension (total length) of the upper jaw portion 31 along the jaw portion axis A. The operation lever 33 has a lever body 48, a grip part 49, a male screw shaft 50, and a step part 51.

The lever body 48 has a pillar shape extending along the lever axis B, and has a columnar shape in the present embodiment. The lever body 48 extends upward from the second large-diameter part 44 of the upper jaw portion 31.

The grip part 49 is provided at an upper end portion of the lever body 48. The grip part 49 has a substantially columnar shape with the lever axis B as a center. The grip part 49 is shaped such that the operator can easily grip it with a palm. An outer diameter dimension of the grip part 49, that is, an outer diameter dimension in the radial direction orthogonal to the lever axis B is larger than an outer diameter dimension of the lever body 48. The grip part 49 may be manufactured separately from the lever body 48 and fixed to the lever body 48 by screwing or the like, or may be integrally formed with the lever body 48 as a single member.

The male screw shaft 50 has a substantially columnar shape with the lever axis B as a center, and extends downward from a lower end portion of the lever body 48. The male screw shaft 50 is screwed into the female screw hole 47. That is, in the present embodiment, the male screw shaft 50 and the female screw hole 47 are screwed together, so that the operation lever 33 and the upper jaw portion 31 are detachably connected to each other.

The step part 51 is disposed between the lower end portion of the lever body 48 and an upper end portion of the male screw shaft 50. The step part 51 is a circular ringshaped flat surface with the lever axis B as a center, and faces downward. The step part 51 contacts the attachment surface 46 from above.

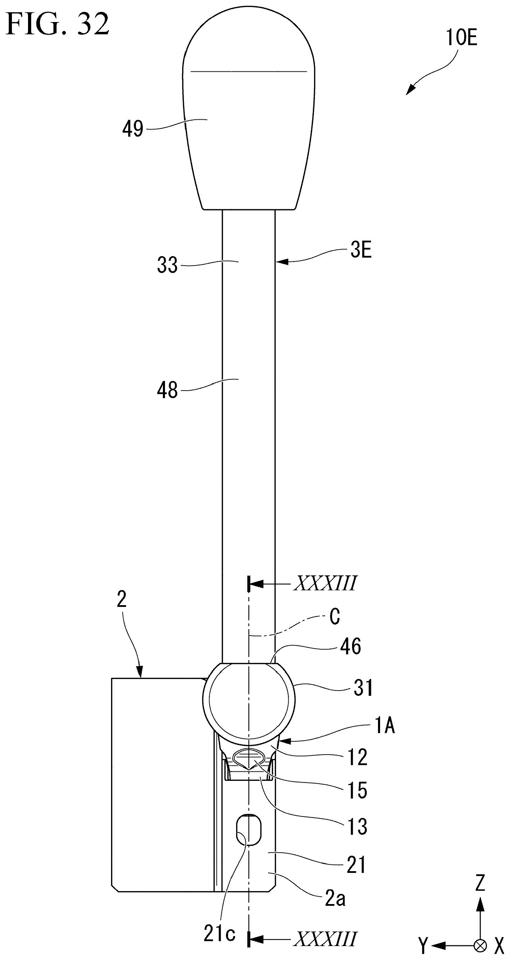

FIGS. 32 and 33 show a usage method of the clamping tool 3E when the cutting insert 1A is clamped. As shown in FIGS. 32 and 33, when performing insert clamping, a tip portion of the upper jaw portion 31 is inserted into the locked portion 24a, and the locking portion 34 is locked to the locked portion 24a.

From this state, when the operator rotationally moves the operation lever 33 in the first direction D1 using the locking portion 34 as a fulcrum, the first pressing portion 35 of the upper jaw portion 31 presses the pressed surface 12b of the cutting insert 1A downward in the insert axial direction, and the shaft portion 13 of the cutting insert 1A is fitted into the shaft hole portion 21b of the holder 2. Accordingly, the cutting insert 1A is fixed and clamped to the holder 2.

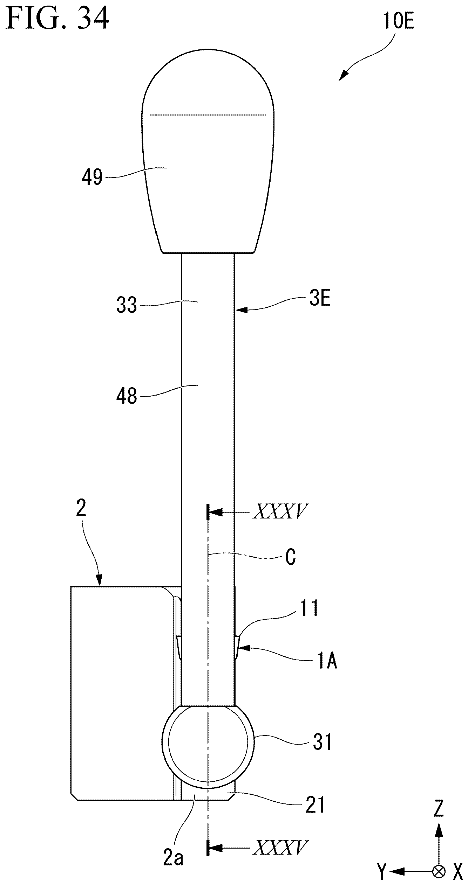

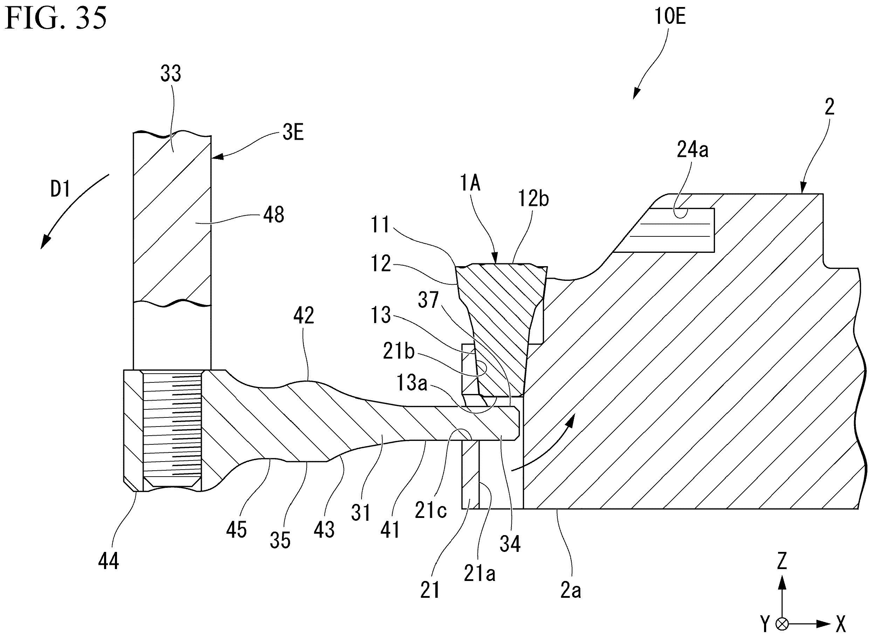

FIGS. 34 and 35 show a usage method of the clamping tool 3E when the cutting insert 1A is unclamped. As shown in FIGS. 34 and 35, when performing insert unclamping, the tip portion of the upper jaw portion 31 is inserted into the through hole 21c, and the locking portion 34 is locked to the through hole 21c. That is, in the present embodiment, a portion where the locking portion 34 is locked to the holder 2 is different between when the cutting insert 1A is clamped and when the cutting insert 1A is unclamped. Specifically, in the present embodiment, the locked portion 24a to which the locking portion 34 is locked when performing clamping corresponds to the first locked portion, and the through hole 21c to which the locking portion 34 is locked when performing unclamping corresponds to the second locked portion.

As shown in FIG. 35, the second pressing portion 37 can come into contact with the lower surface 13a of the shaft portion 13 by inserting the locking portion 34 into the through hole (second locked portion) 21c. From this state, when the operator rotationally moves the operation lever 33 in the first direction D1 using the locking portion 34 as a fulcrum (locking part of the locking portion 34 with the through hole 21c), the second pressing portion 37 pushes the lower surface 13a of the shaft portion 13 upward in the insert axial direction to release the fitting of the shaft portion 13 into the shaft hole portion 21b. That is, in the present embodiment, the lower surface 13a of the shaft portion 13 of the cutting insert 1A functions as the contact portion 13a.

### [Operational Effects Achieved by Present Embodiment]

According to the present embodiment described above, the same effects as those of the above-described embodiment can be obtained.

Furthermore, in the present embodiment, the upper jaw portion 31 and the operation lever 33 are detachably connected to each other.

For example, there may be a plurality of types of cutting inserts 1A having different insert shapes, insert sizes, and the like. In such a case, even though a plurality of types of the upper jaw portions (first jaw portions) 31 need to be prepared for stable clamping of each cutting insert 1A, according to the present embodiment, the operation lever 33 can be used as a common part. For example, compared to a case where a plurality of types of the clamping tools themselves are prepared, according to the present embodiment, a tool storage space can be saved, and a manufacturing cost can also be reduced. Then, it is possible to cope with various insert shapes, insert sizes, and the like by appropriately exchanging the plurality of types of upper jaw portions 31 and attaching them to the operation lever 33.

Further, in the present embodiment, the diameter (outer diameter dimension) of the upper jaw portion 31 increases from the tip portion (small-diameter part 41) of the upper jaw portion 31 toward the first large-diameter part 42 along the predetermined direction.

In this case, a stress is most likely to occur in the vicinity of the first pressing portion 35 that presses the cutting insert 1A when performing clamping, and a pressing force can be stably secured.

In addition, in the present embodiment, the first pressing portion 35 has a planar shape.

In this case, a defect in which the upper jaw portion 31 is unintentionally rotationally moved around the jaw portion axis A when performing insert clamping is suppressed, and the clamping operation is stabilized.

In addition, in the present embodiment, the operation lever 33 is attached to the posterior end portion of the upper jaw portion 31.

In this case, according to the principle of the lever, each operability of the clamping tool 3E when clamping and unclamping the cutting insert 1A is further improved.

In addition, in the present embodiment, a portion (tapered part 43) of the upper jaw portion 31 adjacent to the one side in the predetermined direction of the first pressing portion 35 (first large-diameter part 42), and a portion (neck part 45) of the upper jaw portion 31 adjacent to the other side in the predetermined direction of the first pressing portion 35 are each formed to have a smaller diameter than the first large-diameter part 42.

In this case, when performing insert clamping, a portion of the upper jaw portion 31 adjacent to the first large-diameter part 42 is less likely to come into contact with the cutting edge 11 of the cutting insert 1A. Therefore, unintentional chipping of an edge tip when performing clamping can be suppressed.

In addition, in the present embodiment, the upper jaw portion 31 has a substantially axis-symmetrical shape with the jaw portion axis A as a center, and specifically, has a substantially multi-stage columnar shape.

Therefore, the upper jaw portion 31 can be manufactured by a lathe or the like, and the upper jaw portion 31 can be easily manufactured.

In addition, in the present embodiment, the operation lever 33 has the grip part 49.

In this case, the operator can easily grasp the operation lever 33 by gripping the grip part 49, and the operability of the operation lever 33 is good when the cutting insert 1A is clamped or unclamped. In addition, by providing a thickness or roundness to the grip part 49, the irritation to the palm is reduced when the operator operates the operation lever 33, and pain or the like is less likely to be felt.

### [Other Configurations included in Present Invention]

The present invention is not limited to the above-described embodiments. For example, as will be described below, the configurations can be changed within the scope not departing from the concept of the present invention.

In the first, second, fourth, and fifth embodiments, an example has been described in which the upper side surface 15b of the index portion 15 has a planar shape, but the present invention is not limited to this. The upper side surface 15b may have, for example, a protruded curved shape that bulges outward in the insert radial direction, a recessed curved shape that is recessed inward in the insert radial direction, or the like.

In the first, second, fourth, and fifth embodiments, an example has been described in which four index portions 15 are arranged in the insert circumferential direction, but the present invention is not limited to this. Three or less or five or greater index portions 15 may be arranged in the insert circumferential direction.

In the first to fifth embodiments, an example in which the predetermined direction in which the upper jaw portion 31 extends is the same direction as the tool axial direction of the holder 2 has been described, but the present invention is not limited to this. For example, when viewed from the insert axial direction, the predetermined direction may be inclined with respect to the tool axial direction.

In the first to fifth embodiments, an example in which the locking portion 34 is inserted into the hole-shaped locked portion (first locked portion) 24a and is locked to the holder 2 has been described, but the present invention is not limited to this. That is, means for locking the locking portion 34 to the holder 2 is not limited to insertion into the hole, and may be other locking means.

In the second embodiment, an example in which the action part 32b of the lower jaw portion 32 is inserted into the through hole 21c of the holder 2 has been described, but the present invention is not limited to this. For example, in a case where the length of the cylindrical portion 21 in the up-down direction is sufficiently short, the action part 32b of the lower jaw portion 32 may be disposed below the cylindrical portion 21 so that the second pressing portion 36 can come into contact with the lower surface 13a of the shaft portion 13.

In the fifth embodiment, an example has been described in which the male screw shaft 50 is provided in the operation lever 33 and the female screw hole 47 is provided in the upper jaw portion 31, but the present invention is not limited to this, and the female screw hole may be provided in the operation lever 33, and the male screw shaft may be provided in the upper jaw portion 31. In addition, an example has been described in which the male screw shaft 50 and the female screw hole 47 are screwed together so that the operation lever 33 and the upper jaw portion 31 are detachably connected to each other, but the present invention is not limited to this, and the operation lever 33 and the upper jaw portion 31 may be detachably connected to each other by a method other than screwing.

According to the present invention, all of the configurations described in the above-described embodiments and modification examples may be combined with each other within the scope not departing from the concept of the present invention. Alternatively, additions, omissions, or substitutions of the configurations, and other modifications can be made. Moreover, the present invention is not limited by the embodiment described above and the like, but is limited only by the scope of the claims.

### [Industrial Applicability]

According to the clamping tool, the indexable cutting tool with a clamping tool, and the cutting insert according to the present invention, it is possible to stably clamp the cutting insert to the holder while suppressing the complication of the structures of the cutting insert or the holder. Therefore, the present invention is industrially applicable.

### [Reference Signs List]

1A, 1B: Cutting insert
2: Holder
3A, 3B, 3C, 3D, 3E: Clamping tool
10A, 10B, 10C, 10D, 10E: Indexable cutting tool with clamping tool
11: Cutting edge
12: Head portion
12b: Pressed surface
13: Shaft portion
13a: Lower surface (contact portion)
14: Step portion (contact portion)
15: Index portion (contact portion)
15a, 15b: Surface
21: Cylindrical portion
21a: Hole portion
21b: Shaft hole portion
21c: Through hole (second locked portion)
24a: Locked portion (first locked portion)
31: Upper jaw portion (first jaw portion)
32: Lower jaw portion (second jaw portion)
33: Operation lever
34: Locking portion
35: First pressing portion
36, 37: Second pressing portion
C: Insert central axis
D1: First direction
D2: Second direction
α: Angle

## Claims

1. A clamping tool for attaching a cutting insert to a holder or detaching a cutting insert from a holder, the cutting insert including a head portion having a circular cutting edge with an insert central axis as a center and a shaft portion disposed on a lower side of the head portion in an insert axial direction along the insert central axis, the clamping tool comprising:
a first jaw portion configured to be locked to the holder; and
an operation lever configured to be connected to the first jaw portion,
wherein the first jaw portion has
a locking portion configured to be locked to the holder, and
a first pressing portion configured to push the head portion downward in the insert axial direction and fit the shaft portion into a shaft hole portion of the holder when the operation lever is rotationally moved in a first direction using the locking portion as a fulcrum.

2. The clamping tool according to Claim 1, further comprising:
a second jaw portion disposed below the first jaw portion in the insert axial direction,
wherein the second jaw portion has a second pressing portion configured to push a part of the cutting insert upward in the insert axial direction and release fitting of the shaft portion into the shaft hole portion when the operation lever is rotationally moved in a second direction different from the first direction using the locking portion as a fulcrum.

3. The clamping tool according to Claim 2,
wherein an outer diameter dimension of the shaft portion is smaller than an outer diameter dimension of the head portion,
the cutting insert includes
a step portion configured to connect the head portion and the shaft portion, and
an index portion disposed over a part of the step portion and a part of the head portion and recessed inward in an insert radial direction orthogonal to the insert central axis from an outer peripheral surface of each of the step portion and the head portion,
a plurality of the index portions are arranged in an insert circumferential direction around the insert central axis, and
the second pressing portion comes into contact with at least one of the plurality of index portions.

4. The clamping tool according to Claim 3,
wherein the index portion has a surface located outward in the insert radial direction toward an upper side in the insert axial direction.

5. The clamping tool according to Claim 2,
wherein an outer diameter dimension of the shaft portion is smaller than an outer diameter dimension of the head portion,
the cutting insert includes a step portion configured to connect the head portion and the shaft portion, and
the second pressing portion comes into contact with the step portion.

6. The clamping tool according to Claim 2,
wherein the second pressing portion comes into contact with a lower surface of the shaft portion.

7. The clamping tool according to Claim 1,
wherein the first jaw portion has a second pressing portion configured to push a lower surface of the shaft portion upward in the insert axial direction and release fitting of the shaft portion into the shaft hole portion when the operation lever is rotationally moved in the first direction using the locking portion as a fulcrum.

8. The clamping tool according to any one of Claims 1 to 7,
wherein the head portion has a pressed surface located above the cutting edge in the insert axial direction, and
the first pressing portion comes into contact with the pressed surface.

9. The clamping tool according to any one of Claims 1 to 8,
wherein the first pressing portion protrudes downward from a lower surface of the first jaw portion that faces downward in the insert axial direction.

10. The clamping tool according to any one of Claims 1 to 9,
wherein the locking portion extends in a predetermined direction among insert radial directions orthogonal to the insert central axis, and
the locking portion has a dimension in the insert axial direction larger than a dimension in a direction orthogonal to each of the predetermined direction and the insert axial direction.

11. The clamping tool according to any one of Claims 1 to 10,
wherein the first jaw portion extends in a predetermined direction among insert radial directions orthogonal to the insert central axis, and
when viewed from a direction orthogonal to the predetermined direction and the insert axial direction, an angle between the predetermined direction in which the first jaw portion extends and a direction in which the operation lever extends is 60° or greater and 180° or less.

12. The clamping tool according to any one of Claims 1 to 11,
wherein the first jaw portion and the operation lever are detachably connected to each other.

13. An indexable cutting tool with a clamping tool comprising:
the cutting insert;
the holder; and
the clamping tool according to any one of Claims 1 to 12,
wherein the holder has a first locked portion to which the locking portion is locked, and
the first locked portion is a hole recessed from an outer surface of the holder and configured to receive the locking portion.

14. The indexable cutting tool with a clamping tool according to Claim 13,
wherein the first locked portion has a dimension in the insert axial direction larger than a dimension in a direction orthogonal to each of a predetermined direction in which the locking portion is inserted into the first locked portion and the insert axial direction.

15. An indexable cutting tool with a clamping tool comprising:
the cutting insert;
the holder; and
the clamping tool according to Claim 6,
wherein the holder has a cylindrical portion extending in the insert axial direction,
the cylindrical portion has
a hole portion extending in the insert axial direction inside the cylindrical portion and in which the shaft hole portion is disposed, and
a through hole penetrating a surrounding wall of the cylindrical portion in an insert radial direction orthogonal to the insert central axis and communicating with the hole portion, and
the second pressing portion is configured to come into contact with the lower surface of the shaft portion by inserting at least a part of the second jaw portion into an inside of the hole portion through the through hole.

16. The indexable cutting tool with a clamping tool according to Claim 15,
wherein the through hole has a dimension in the insert axial direction larger than a dimension in an insert circumferential direction around the insert central axis.

17. An indexable cutting tool with a clamping tool comprising:
the cutting insert;
the holder; and
the clamping tool according to Claim 7,
wherein the holder has a cylindrical portion extending in the insert axial direction,
the cylindrical portion has
a hole portion extending in the insert axial direction inside the cylindrical portion and in which the shaft hole portion is disposed, and
a second locked portion penetrating a surrounding wall of the cylindrical portion in an insert radial direction orthogonal to the insert central axis and communicating with the hole portion, and
the second pressing portion is configured to come into contact with the lower surface of the shaft portion by inserting the locking portion into the second locked portion.

18. A cutting insert comprising:
a head portion having a circular cutting edge with an insert central axis as a center;
a shaft portion disposed on a lower side of the head portion in an insert axial direction along the insert central axis and configured to be fitted into a shaft hole portion of a holder; and
a contact portion configured to be pushed up by a clamping tool from a lower side in the insert axial direction.

19. The cutting insert according to Claim 18, further comprising:
a step portion configured to connect the head portion and the shaft portion having a smaller outer diameter dimension than the head portion; and
an index portion disposed over a part of the step portion and a part of the head portion and recessed inward in an insert radial direction orthogonal to the insert central axis from an outer peripheral surface of each of the step portion and the head portion,
wherein a plurality of the index portions are arranged in an insert circumferential direction around the insert central axis, and
at least one of the plurality of index portions is the contact portion.

20. The cutting insert according to Claim 19,
wherein the number of the index portions is a multiple of 4.

21. The cutting insert according to Claim 18, further comprising:
a step portion configured to connect the head portion and the shaft portion having a smaller outer diameter dimension than the head portion,
wherein the step portion is the contact portion.

22. The cutting insert according to Claim 18,
wherein a lower surface of the shaft portion is the contact portion.
